Europäisches Patentamt

European Patent Office

Office européen des brevets

(19)

(11) Publication number: **0 100 842**
**B1**

(12)     **EUROPEAN PATENT SPECIFICATION**

(45) Date of publication of patent specification: **07.09.88**

(51) Int. Cl.⁴: **H 04 Q 3/52,** H 04 Q 3/495

(21) Application number: **83106028.0**

(22) Date of filing: **21.06.83**

(54) **Circuit switching arrangement.**

(30) Priority: **12.08.82 US 407530**

(43) Date of publication of application:
**22.02.84 Bulletin 84/08**

(45) Publication of the grant of the patent:
**07.09.88 Bulletin 88/36**

(84) Designated Contracting States:
**DE FR GB**

(56) References cited:
INTERNATIONAL SWITCHING SYMPOSIUM,
7th-11th May 1979, pages 619-626; Paris, FR;
M.AKIYAMA et al:: "Speech-path selection and
inter-processor signalling in a load-shared
distributed switching system"

NACHRICHTENTECHNISCHE ZEITSCHRIFT,
vol. 24, no. 8, August 1971, pages 427-432,
Berlin, DE; K.RESCHENEDER et al.:
"Freiprüfung von Koppelstufen"

INFORMATIONEN FERNSPRECH-
VERMITTLUNGSTECHNIK, vol. 2, no. 3,
October 1966, pages 107-113, München, DE;
R.ROSS et al.: "Steuerung und Aufbau des
Auslandsrichtungskopplers 66"

(73) Proprietor: **International Business Machines
Corporation
Old Orchard Road
Armonk, N.Y. 10504 (US)**

(72) Inventor: **Featherston, John Richard
365 Western Drive
Santa Cruz California 95060 (US)**
Inventor: **Hopner, Emil
211 Prospect Avenue
Los Gatos California 95030 (US)**
Inventor: **Patten, Michael Allen
932 Gale Drive
Campbell California 95008 (US)**
Inventor: **Watkins, Robert Vernon
275-34 Burnett Road
Morgan Hill California 95037 (US)**

(74) Representative: **Appleton, John Edward et al
IBM United Kingdom Limited Intellectual
Property Department Hursley Park
Winchester Hampshire SO21 2JN (GB)**

Courier Press, Leamington Spa, England.

# Description

This invention relates to electronic circuit switching arrangements.

Electronic circuit switching has developed rapidly due to the higher speed of switching available with electronic components over that available with conventional electromagnetic switching components and due also to the ultimate lower cost of equipment promised in view of contemporary development.

For predetermined reliability, the major goal is speed. To increase overall speed in translating data electronically, not only must the data be translated at the maximum speed, but the circuits sought, connected and disconnected with the least delay.

One approach to the problem of selecting circuits at high speed is described in the three United States Patents A-4201889, 4201890 and 4201891. Here each switch arrangement in the system has its own control processor in the form of an access switch stage connected to each of a number of shared processors external to the switch arrangement, which can lead to disadvantages such as delays in processing time when a number of switching processes are competing simultaneously for control information.

Another approach is described in the paper by M. Akiyama et al, entitled "Speech-path selection and inter-processor signalling in a load-shared distributed switching system", International Switching Symposium, 7th—11th May 1979, pages 619—626, Paris, France, which described the speech-path selection methods and the inter-processor signalling in a load-shared distributed switching system. The distributed switching system consists of a number of relatively small but autonomous switch units. These switch units are operated separately and independently. Several control methods are proposed for the speech-path selection. Traffic handling characteristics of these methods are compared. It is shown that even a step-by-step selection by independently operated distributed switch units is realizable, if one or two times of retrials are allowed.

A loop network is proposed for the inter-processor signalling of the distributed switching system. In this network, control signals between switch units are transmitted by the packet switching principle. The average number of control packets required to connect a call is calculated. Traffic handling characteristic of the loop network is analyzed. Some formulae which are useful to design the signalling network are derived.

It is accordingly an object of the present invention to provide an improved electronic circuit switching arrangement which permits such delays to be minimised.

According to the invention, we provide a distributed control progressive electronic circuit switching arrangement comprising an originating group circuit arrangement having a multiple or originating terminals to which given information handling systems are to be connected, an intermediate group circuit arrangement having a multiple of input terminals to be connected to corresponding terminals of said originating group circuit arrangement, a terminating group circuit arrangement having a multiple of terminals to which other information handling systems are to be connected and having input terminals to be connected to corresponding terminals of said intermediate group circuit arrangement a source of timing pulses connected in common to each of said groups, circuitry in said originating group circuit arrangement for accepting a request from an originating terminal to which a given information handling system is attached for connection to a particular terminating group circuit terminal to which is attached the specific information handling system with which communication is desired and for sensing the status from said intermediate groups with respect to the connectivity to that specific terminating group, electronic switch circuitry connected between said originating terminal of said originating circuitry and a terminal thereof corresponding to the specific input terminal of said intermediate group and having an actuating terminal, circuitry connected to said request accepting circuits and to said sensing circuitry and having an output terminal connected to said actuating terminal of said switching circuitry for establishing an electric connection in response to matching data at said comparing circuitry, circuitry in said intermediate group for accepting a request relayed from said originating group to the electric connection established thereby, electronic switch circuitry connected between the input and output terminals of said intermediate group and each having an actuating terminal, circuitry for sensing data connected to said circuitry for accepting a request from said originating group and connected to the terminals connected to said terminating group and having an output terminal connected to said actuating terminal of said switch circuitry for establishing an electric connection in response to matching data, circuitry in said terminating group for receiving said connection request as relayed from said intermediate group and for searching for the line address corresponding to said connection request, circuitry in said terminating group for determining the available/busy status of the information handling system terminals and for returning an appropriate response to said originating group, and switch circuitry in said terminating group for establishing electric connection in case of available status, and for disconnecting the connections established to this point in case of busy status.

In a preferred embodiment of the invention, a signal appearing at an originating terminal of the switching arrangement intended for a destination terminal of that arrangement is propagated through a multiple of stages forming one control path between the originating and terminating terminals toward that destination. If the destination terminal is idle, the same signal or a like signal is propagated back to the originating terminal along an identical or a similar control path and the latter signal is employed to hold the connections. Simultaneously two identical electric signal paths are established for simultaneously translating data in both directions between the originating and terminating terminals. All four of these electric signal paths are established simultaneously, eliminating any delay resulting from a non-simultaneous step connection. Each electric signal path comprises three terminal stages connected in series between the originating terminals and the terminating terminals. Terminals at the final stages that are idle, or not busy, are preconnected electrically according to the invention to terminals at an intermediate stage, thus one variable normally calling for time is reduced to a minimum delay. When a signal requesting a designated terminal is processed, a scanning or commutating operation associated with only the originating terminal is initiated. This commutating or scanning operation proceeds from terminal-to-terminal of the intermediate stage. Once an "idle" or available intermediate terminal is reached, commutation is halted and the switch connections made (closed). Thus no more time is consumed in scanning or commutating for this particular switching set up. On the average, better than half of the scanning time normally consumed is saved. Each such scanning operation is independent of the others. In a preferred arrangement, a time division multiplexing system is used whereby one scanning time slot is spaced but one time slot from the next. In this manner the scanning operations are virtually in parallel with a progressive skew from one to the next of but one time slot; this reduces the time delay in the overall switching operation for an exchange considerably from those of the prior art arrangements. In the preferred arrangement, the commutating operation at the intermediate stage terminals is ongoing continuously for all idle terminals. Thus the service provided to an originating terminal having a request waits only for the first time slot connecting an idle intermediate terminal leading to the desired (requested) terminating terminal.

The invention, and the manner in which it may be put into effect, will be clearly understood from the following description of the embodiment referred to above, when read in conjunction with the accompanying drawings, in which:—

Fig. 1 is a logical diagram for implementing the switch architecture in a distributed control progressive switch circuit arrangement according to the invention;

Fig. 2 is an architectural diagram of such a progressive switch according to the invention;

Fig. 3 is a graphical representation of switch control timing waves for controlling a circuit arrangement according to the invention;

Fig. 4 is a logical diagram of an originating control and switch matrix according to the invention;

Fig. 5 is a logical diagram of an intermediate control and switch matrix according to the invention;

Fig. 6 (sections 6A and 6B being taken together) is a logical diagram of terminating line request logic for a single link according to the invention;

Fig. 7 is a logical diagram of a terminating line status logic for a given line according to the invention;

Fig. 8 is a logical diagram of terminating group control logic according to the invention;

Fig. 9 is a logical diagram of the terminating switch matrix according to the invention;

Fig. 10 is a logical diagram of a primary forward switch plane or a tertiary reverse switch plane according to the invention;

Fig. 11 is a logical diagram of a primary reverse switch plane or a tertiary forward switch plane according to the invention;

Fig. 12 is a graphical representation of timing waves for operation of the link selection sequence of a port-to-port connection of a circuit arrangement according to the invention;

Fig. 13 is a logical diagram of a secondary forward switch plane according to the invention;

Fig. 14 is a logical diagram of a secondary reverse switch plane according to the invention;

Fig. 15 is a graphical representation of waveforms depicting the cycles of the "line address" and "address type transmission" of a circuit arrangement according to the invention;

Fig. 16 is a graphical representation of the "response transmission" cycle in a circuit arrangement according to the invention;

Fig. 17 is a graphical representation of waveforms arranged for initiating data base sequence operation in a circuit arrangement according to the invention;.and

Fig. 18 is a graphical representation of waveforms arranged for a disconnecting sequence of operation in a circuit arrangement according to the invention.

## General description

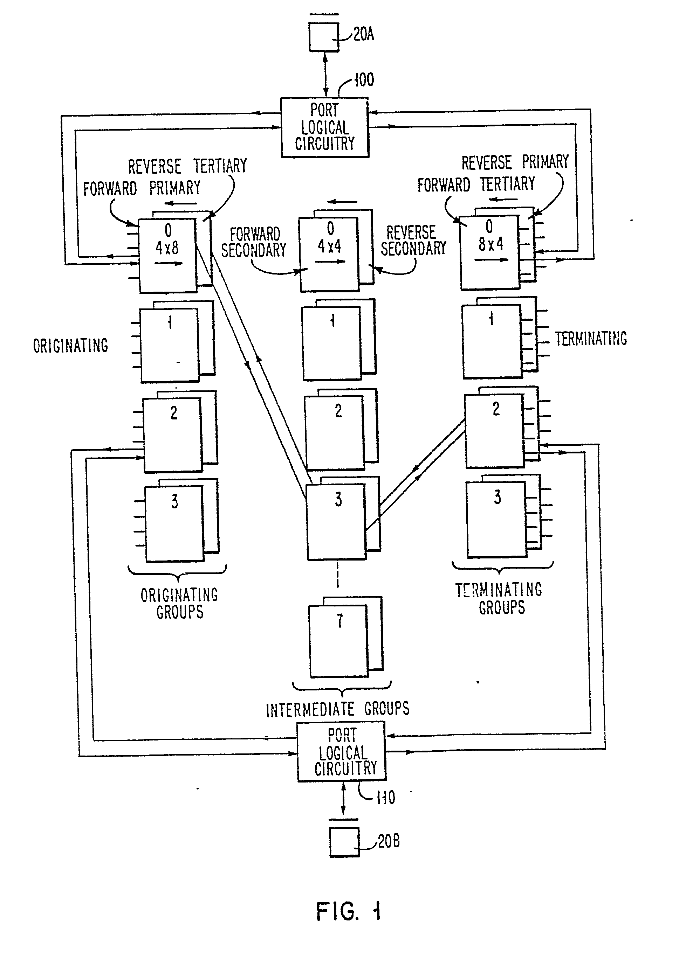

A logical diagram showing the general arrangement of a communication system according to the invention is given in Fig. 1. A subscriber instrument 20A is but one of many such instruments by which communications is established with one or more of other such instruments, for example the subscriber instrument 20B. In the interest of clarity, one forward path and one reverse path only are shown here for a 16 by 16 progressive switch.

## Switch Architecture

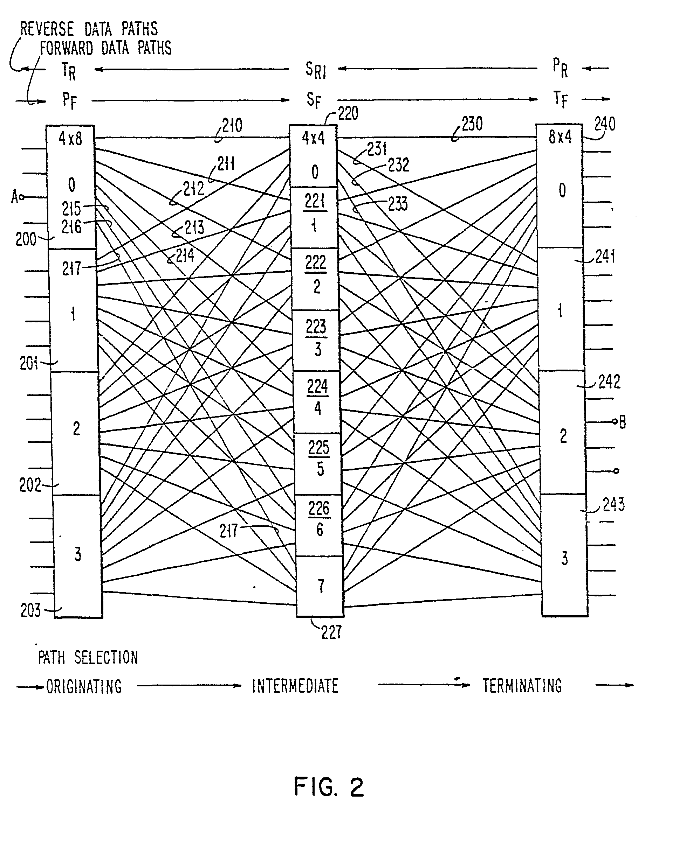

The logical architecture of the aforementioned 16 by 16 line progressive switch arrangement is schematically shown in Fig. 2. Four 4 by 8 matrices, 200, 201, 202 and 203, are each connected by one link, 210, 211, ... 218, as examples, to each of eight 4 by 4 matrices, 220, 221, ... 227, each of which is similarly connected by links 230, 231, 232 and 233, as examples to four 8 by 4 matrices, 240, 241, 242 and 243. This interconnection of matrices with links is referred to hereinafter as a "switch plane". The 4 by 8 matrices, 200—203, are referred to as "primaries", the 4 by 4 matrices, 220—227 as "secondaries" and the 8 by 4 matrices 240—243 as "tertiaries". The four primary matrices make up a "primary stage" of switching. The eight secondary matrices and four tertiary matrices each make up a "secondary" and "tertiary" stage of switching, respectively. Thus, the configuration is a 3-stage switch plane. Four such planes make up this exemplary model described hereinafter. Two planes carry information left to right and are referred to as "forward switch planes", and two carry information right to left and are referred to as "reverse switch planes". In the forward planes, one is dedicated to carrying information necessary for switch or control operation and the other is reserved exclusively for subscriber message information or data. The same holds true for the reverse planes. In both cases, the planes reserved for subscriber information are referred to as "data planes". The planes that carry information for switch operation are referred to as "control planes".

Preferably from a structural standpoint, the planes are arranged vertically; that is, each matrix as depicted in Fig. 2, has three more matrices arranged beneath it. The forward planes are arranged left to right with P, S and T stages; the reverse planes are arranged from left to right with T, S and P stages. In other words, the four planes reside vertically with forward and reverse planes being a left-right mirror image of each other.

Each stack of four matrices is referred to as a group. The PST designations for matrices cannot be applied to the groups since the right most and left most groups are composed of both P and T matrices. Since the groups are formed for functional reasons and since connections originate on the left and terminate on the right of the switch, the groups are referred to as Originating Groups 0—3, Intermediate Groups 0—7 and Terminating Groups 0—3, left to right.

To make a connection through the switch from one terminal A to another terminal B, it is necessary for originating group 0 to set up a path through each of its four matrices from the terminal A to an intermediate group, for example that of matrix 223 or group 3. Intermediate group 3 must in turn set up a connection in each of its four matrices from originating group 0 to terminating group that of matrix 2. In turn, terminating group 2 completes the connection to the terminal B. In a sense each group of matrices operates as a number of four pole switches with connections in each plane progressing in parallel from left to right.

Even though connections progress from left to right it must be remembered that a connection consists of two sets of bi-directional information paths, one set for message data, the other for switch control levels.

Exemplary model

A diagram of an exemplary model which implements the previously described switch architecture is that shown in Fig. 1. One forward and one reverse plane are shown. For simplicity, only those links, 213, 411 and the corresponding included in a hypothetical terminal A to terminal B connection are as from an instrument 20A another instrument 20B are included.

Two subscribers, A and B, are shown interfaced to the originating and terminating sides of the switch through what is called Port Logical Circuitry. The function of port logical circuitry is to convert a connection request of one subscriber to form suitable for controlling the switch to set up the desired connection path. Once the connection is set up, the port logical circuitry associated with the subscriber to which the connection has been directed signals the other subscriber that a connection has been made to it. At this point the recipient of the connection may signal through the associated port logical circuitry, the established communication path and the originating subscriber port logical circuitry its desire to communicate. This signalling is done over the control planes of the switch which were previously used for passing information necessary for path set up. If communications are desired at this point between subscribers, their associated port logical circuitry enables transmission between them on the bi-directional data planes of the established connection path.

The port logical circuitry transmits busy indications to each other over the control planes of the connection path for the duration of the connection. When either port logical circuitry receives a disconnect request from one associated subscriber, it stops the busy signal transmission to the other port signalling that a disconnect operation is in progress. The control logical circuitry in each switching group involved in the connection also detects the absence of busy signal transmissions from either port logical circuitry by monitoring the control planes of the connection path. When this detection occurs, the four plane matrix connections in each group are disconnected, breaking up the entire connection path.

Connection set up and disconnection

Each port (port logical circuit) is connected to both the originating and terminating sides of the switch. Connections are established through the originating side in response to information transmitted from the port to the originating group to which it is attached. The first piece of information received by the originating group is the subscriber's terminating group address of the recipient. The originating group must now select an intermediate group through which to route the connection. By selecting an intermediate group a complete connection path has been defined over originating to intermediate and intermediate to terminating links. However, before an intermediate group can be selected, the "busy/idle" status of the involved links must be known. The status of originating to intermediate links is available to the originating group since it is connected to it. The status of the intermediate to terminating links is broadcast by each intermediate group to each originating group where there exists an idle link to do so. This broadcast is a time division multiplexed signal transmitted over the reverse control plane of the idle originating to intermediate links. The transmitted signal is referred to as the "idle scan waveform".

The originating group therefore selects an intermediate group by examining the idle scan waveforms received from intermediate groups with which it currently shares an idle link. Of the possibly several intermediate groups to which it has an available link, it selects one that also has an available link to the terminating group of the recipient. This eliminates the "cut and try" method by finding an intermediate group that can make a complete connection before one is established.

Upon selecting an intermediate group, the originating group makes a connection to that group and goes transparent so the originating port logical circuitry is essentially connected directly to the intermediate group. The originating port logical circuitry is still the terminating group. The terminating group is now transparent so essentially a direct connection exists between originating and terminating ports. The function of each stage of switching now is to monitor busy indications in both directions (from the interconnected port logical circuitry) and hold the established connection until busy indications cease.

The recipient port logical circuitry now indicates to the associated subscriber that a connection has been made to it. At this point, the two subscribers may "hand shake" through the ports over the control planes of the connection. When data transmission is desired between subscribers the ports simply connect them to the data planes of the connection. When either subscriber desires a disconnection, the pertinent port logical circuitry ceases transmission of the busy indication. This condition is detected at the other port logical circuitry and at all switching groups that the connection passes through. The entire connection is therefore disconnected. (Note: Subscribers may desire also to "hand shake" before disconnection).

In summary, originating port logical circuitry transmits a terminating group address to the corresponding originating group. The originating group compares the address with the idle scan waveforms received from various intermediate groups. On this basis, an available intermediate group capable of completing a connection to the recipient terminating group is selected. It makes a connection to the selected intermediate group and goes transparent. The recipient terminating group address is now available to the intermediate group which makes a connection to the terminating group and goes transparent. The terminating groups send a signal to the originating port logical circuitry and the terminating group sends busy indications to each other continuously, time multiplexed with other information on the control planes of the connection. Originating and intermediate groups involved in the connection are completely transparent, but monitor the busy indications holding the connection path. The terminating group receives the recipient line address from the originating port logical circuitry and determines whether that line is busy. If the line is busy, a negative response followed by the ceasing of busy indications is transmitted to the originating port logical circuitry. This causes the connection to be completely disconnected. If the line address is not busy, a positive response is sent to the originating port logical circuitry and a connection is completed from the originating port logical circuitry to the recipient port. The subscribers may then communicate over the data planes of the connection path preceded by "hand shaking" if needed. This "hand shaking" would be handled by the port logical circuitry over the control planes of the connection. When a subscriber desires to disconnect, the port ceases busy indications and the connection is broken. A disconnection, in the same manner as a connection, may be preceded by subcriber "hand shaking".

Relocation and call forwarding

The exemplary model hardware includes a relocate function. This function allows a subscriber to move to a different location and maintain the same address on the switch without rewiring. This function can be implemented on a permanent basis for relocation or on a temporary basis for call forwarding.

A subscriber, when first attached to the switch, is assigned a physical address corresponding to the line terminal to which it is attached. All connections directed to the subscriber are made using this physical address. If the subscriber moves to a different location which is connected to the switch on a different line, rewiring would be necessary to maintain the old physical address. With the relocate function connections would progress through the switch to the terminating group of their old locations. After receiving the line address, the terminating group normally transmits a positive or negative response to the originating port logical circuit and completes or breaks the connection according to the busy idle status of the addressed line. However, in the case of a "relocate", the new address which is stored in the terminating group is transmitted to the originating port and the connection is broken. The originating port makes a second connection using the new address obtained during the first connection.

Addresses originally assigned to subscribers are referred to as "Assigned" addresses. The address required to make a connection to the present location is referred to as a "Current" address. All relocated subscribers have a current address stored in the terminating group associated with their assigned address. In a sense, a distributed directory exists in the terminating groups.

## Circuit description

### Information format

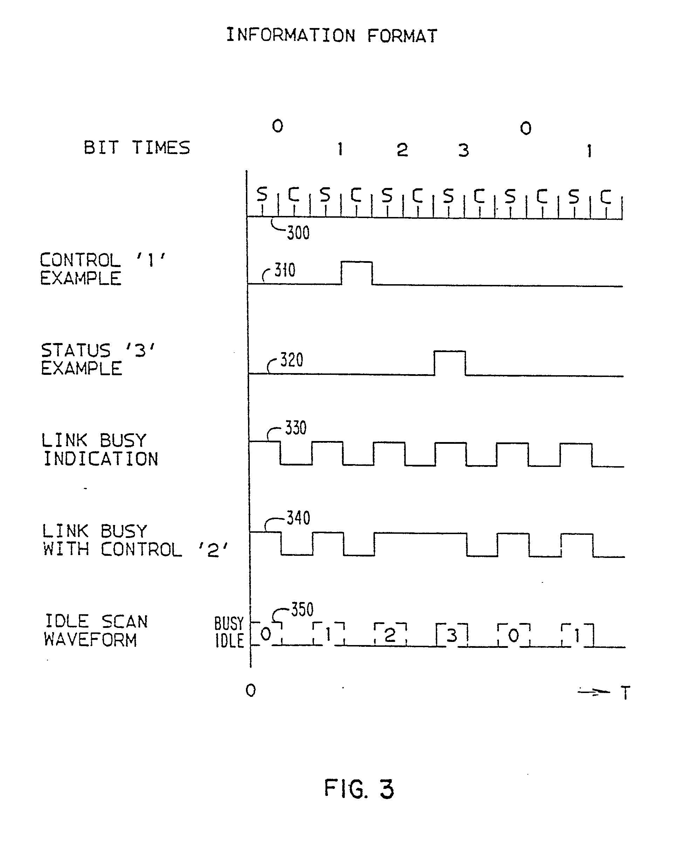

Transmission of subscriber information on the data planes of a connection is completely transparent and asynchronous to switch control timings. Information transmitted by ports and terminating groups for switch control, on the other hand, is completely synchronous with switch timings. Fig. 3 graphically represents an information format, a curve 300 represents four time slots 0, 1, 2 & 3, each subdivided into S (status) and C (control) portions; this is the basis for all switch timing.

Two types of information are transmitted using this format. One is control, transmitted during the C portion of each time slot, the other is status, transmitted during the S portion of each time slot. The transmission of a Control '1' and a Status '3' represented by Curves 310 and 320. The busy indication referred to earlier is shown by a Curve 330 to consist of a continuous series of S pulses. The line address transmission and other information transferred during the transmission of busy indications is time multiplexed with the busy indications. An example of this, Link Busy with Control '2', is shown by a curve 340. All control information transferred after busy indications have started is time multiplexed in this manner. As mentioned earlier, the "idle scan waveform", curve 350, is transmitted to each originating group from each intermediate group over all idle originating to intermediate links. This waveform transmitted from a given intermediate group contains the busy idle status of the links of that particular group to terminating groups. The status of each link to terminating groups 0, 1, 2 and 3 is transmitted during the S portion of time slots 1, 2 and 3 respectively to compose the idle scan waveform.

## Switch group control logic description

### Operating group

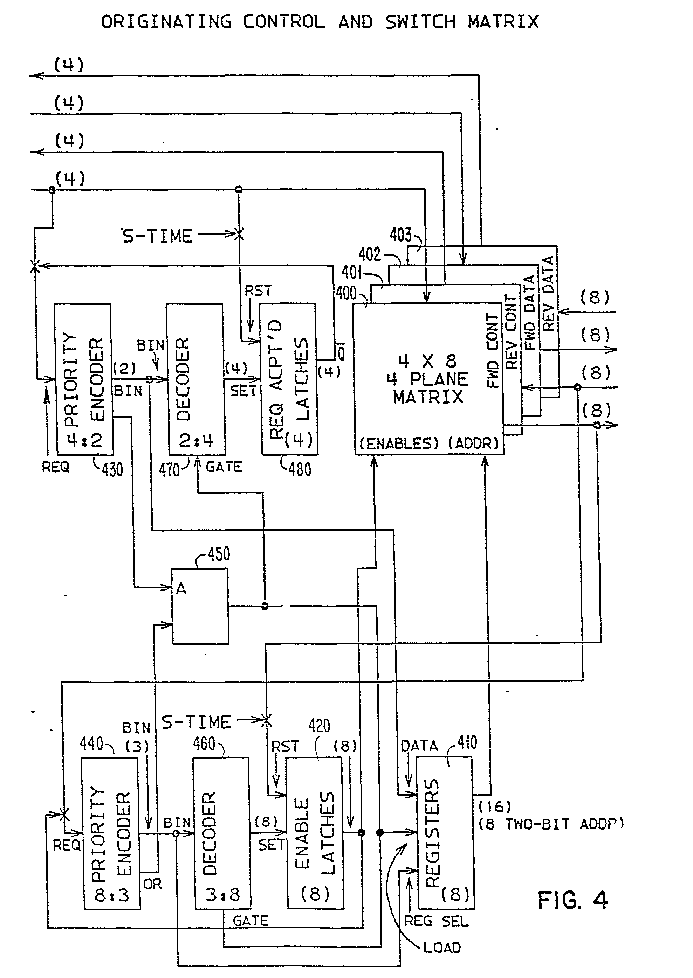

Fig. 4 shows control logical circuitry for an originating switch group. A stack of matrices, 400, 401, 402 and 403, is controlled by this logical circuitry. The function of the logical circuitry is to compare a terminating group address presented by a port with possibly several idle scan waveforms from various intermediate groups to determine through which intermediate group the connection should be routed. Once this determination is made, one of eight 2 bit addresses controlling the four matrices in parallel must be set up to direct the connection to the desired intermediate group. When the address is set up, the associated enable line is activated and the group becomes transparent to the connection. The forward control link to the intermediate group is then monitored for busy indications to determine when to deactivate the enable line, thus breaking the connection.

### Intermediate group

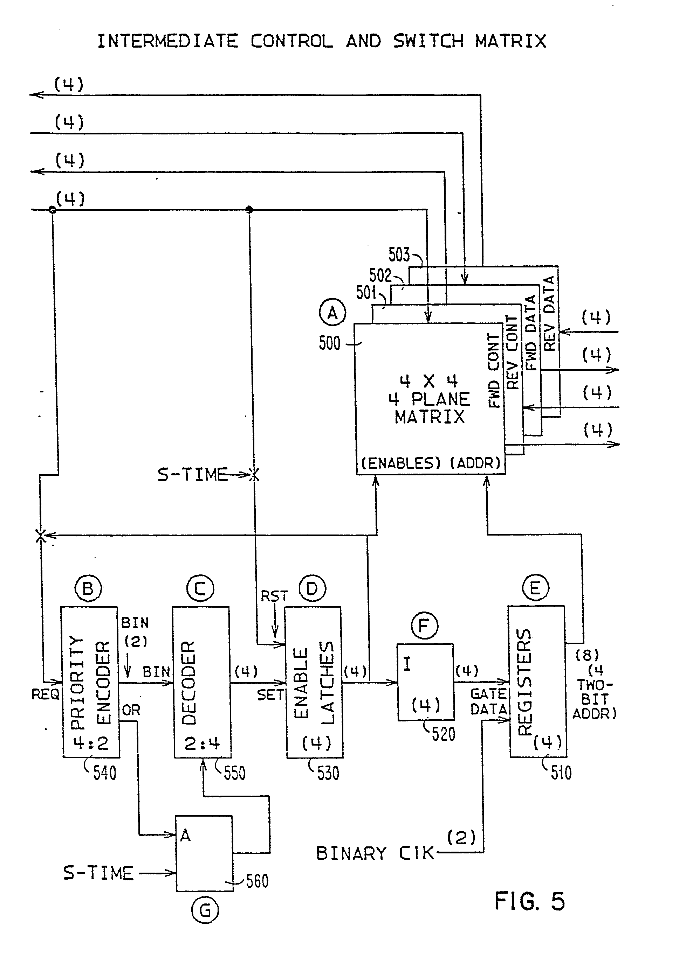

Fig. 5 shows the control logical circuitry and associated matrices, 500, 501, 502 and 503, for an intermediate switch group. One of the functions of this logical circuit is to produce idle scan waveforms on all reverse control lines of idle links to the originating groups. This is accomplished by making connections in the reverse control matrix from terminating groups 0 through 3, sequentially and in synchronism with the switch transmission time slots 0 through 3 respectively. Connections are made in this manner between terminating and originating groups where an idle link exists to do so and are only enabled during the S portions of the time slots. Therefore an originating group receives a sample of the information transmitted from each terminating group over the reverse control plane 501 during the S portion of each time slot. In this way originating groups are essentially tapped in on connections that exist (if the intermediate to terminating link is in use) or links that are idle. When tapped in on a link in use during S time (S portion of a line slot), an originating group receives the busy pulse (one pulse of a string of busy indications which occurs each S time) emitted by the terminating group using the link. When tapped in on an idle link, the originating group receives no busy pulse. By examining the idle scan waveform an originating group knows which intermediate to terminating group links are in use since idle scan connections are synchronous with time slots. For example, a busy pulse received in time slot 2 was emitted by terminating group 2 since all intermediate groups make idle scan connections to the links from terminating group 2 during that time slot.

In summary, reverse control transmissions from each terminating group are multiplexed in sequence over idle intermediate to originating group links. This is accomplished by controlling the intermediate group reverse control matrices to perform a commutating action.

The other function of the intermediate groups is to receive a terminating group address on an originating to intermediate group link from an originating port and use the address to set up one of four 2-bit address registers controllings its stack of matrices thus directing the connection to the appropriate terminating group. The terminating group address transmission consists of a pulse during the S portion of the time slot which corresponds with the terminating group address. Therefore a terminating group address pulse is coincident with the commutation of the link from the intermediate group to that terminating group. An address pulse for terminating group X received on an idle link freezes the commutating action for that link on terminating group X, thereby setting up the address for the connection. At this point all four matrices in the intermediate group are enabled for the connection. A transparent path now exists between the originating port and the terminating group of the recipient. The function of the intermediate group now is to monitor the busy indication of the forward control plane 500 of the originating to intermediate link and disable the connection when the busy indications cease.

Terminating group

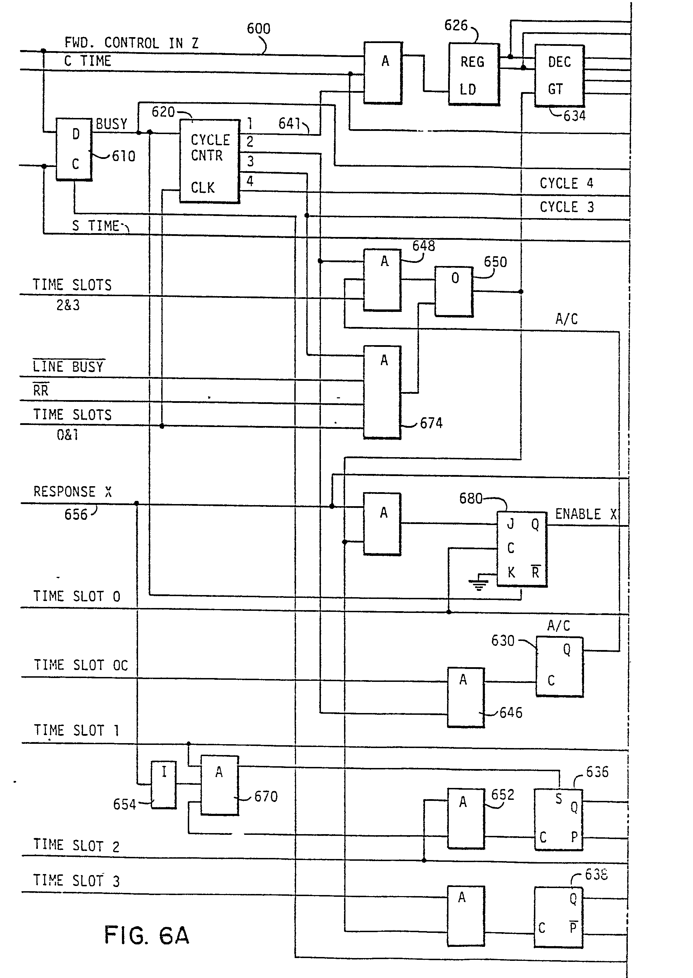

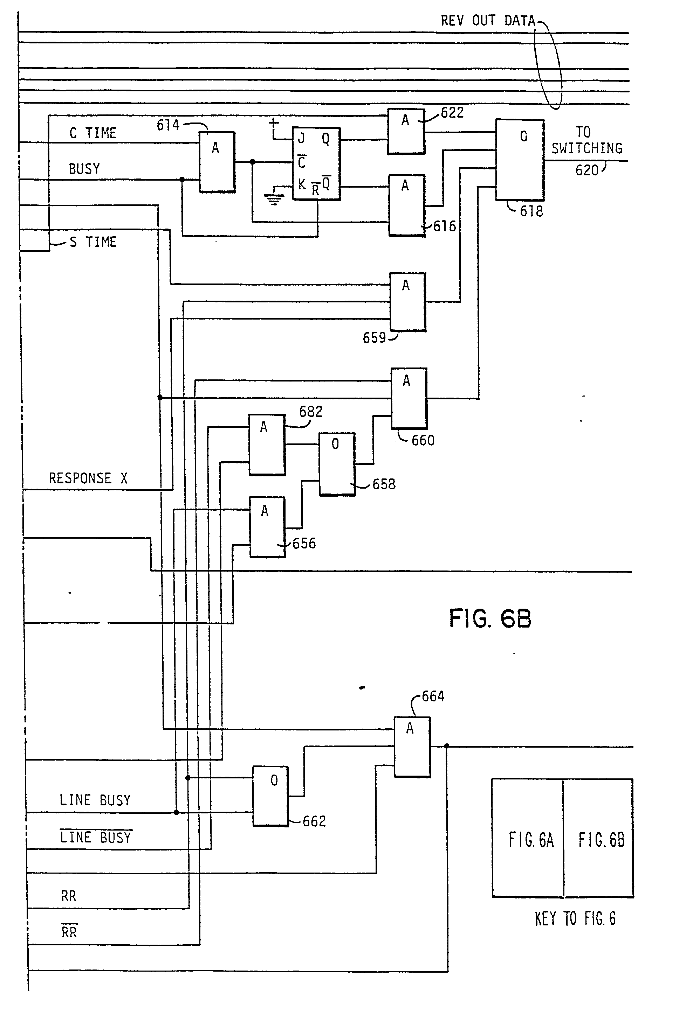

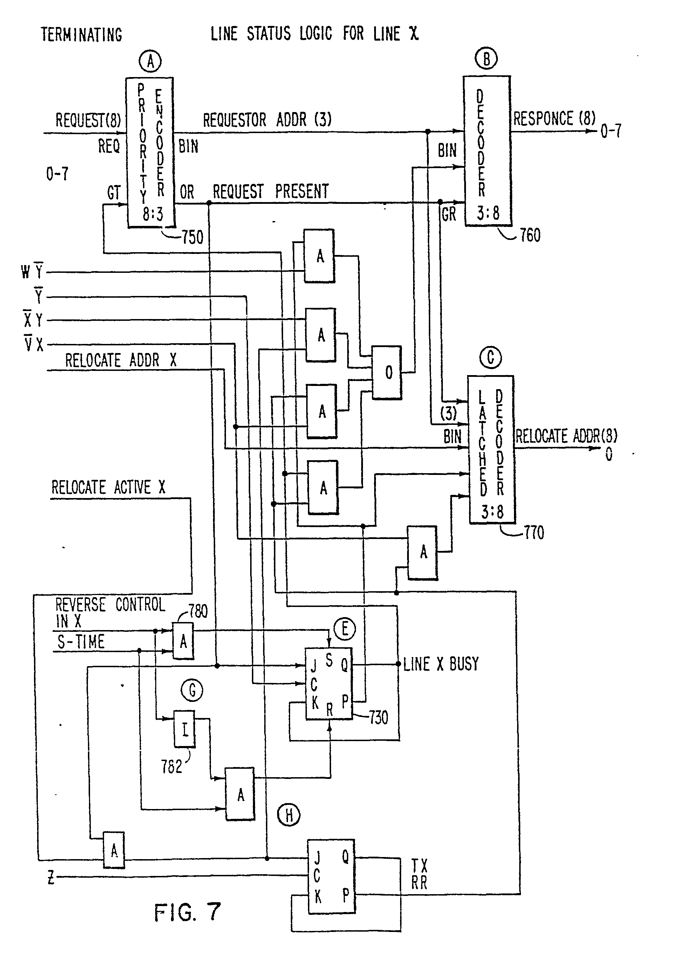

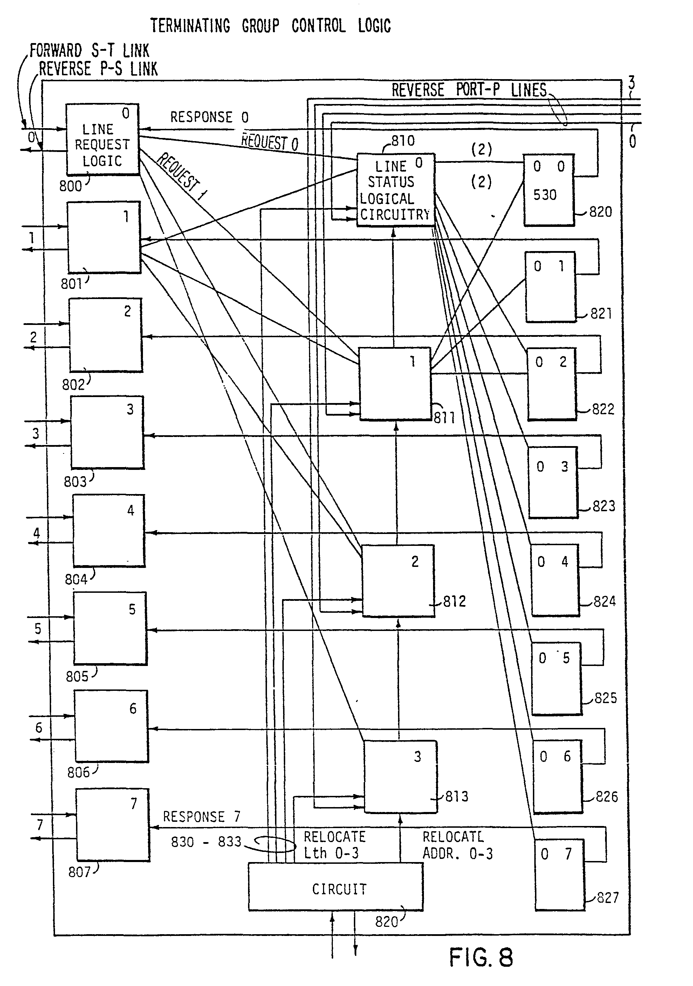

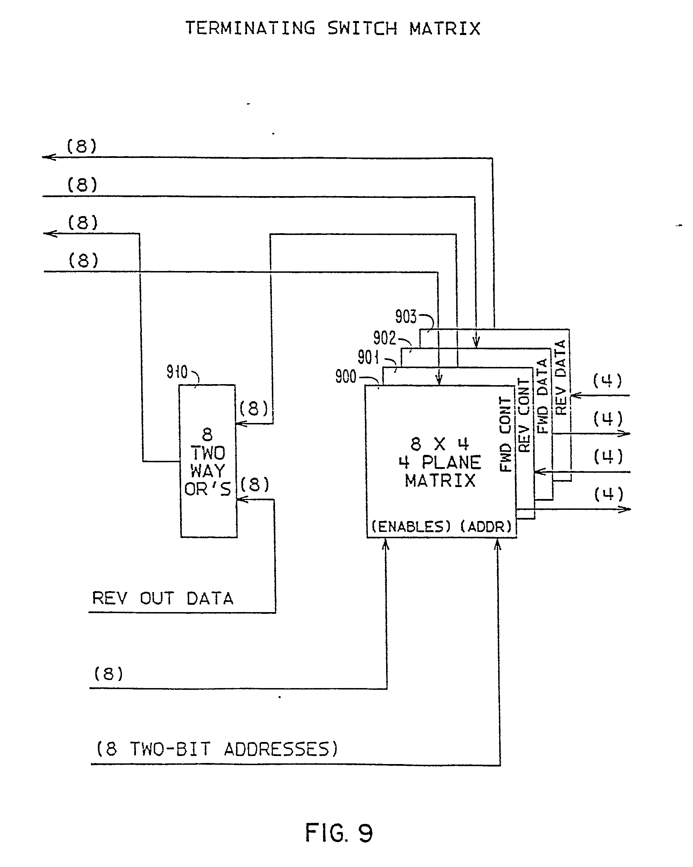

Figs. 6 and 7 represent the two types of control logical circuits in a terminating group. Fig. 6 shows "line request logical circuitry" which appears eight times in a terminating group, while Fig. 7 shows the "line status logical circuit" which appears four times in a group. Fig. 8 shows the arrangement of these logical circuits in a group and, in addition, shows a circuit referred to as the relocation information circuit 820. Fig. 9 shows switch matrices 900, 901, 902 and 903 for a terminating group. Referring to Fig. 8, the function of the "line request logical circuitry" is to interface each of eight intermediate to terminating group links. The logical circuit receives the terminating group address pulse as an indication that a connection request is to follow. At this point, a pulse is transmitted from the request logical circuit to the originating port verifying that the connection is established to the terminating group. Busy indications are then transmitted by the terminating group and indications at the port logic circuitry are monitored during the connection request. The request consists of a line address transmission followed by an address type transmission. (At this point the terminating group is communicating directly with the originating port through the connection established thus far). The line address indicates to which of the four line-to-user ports the connection is to be directed. The address type qualifies the address as either subscriber supplied or relocate connection supplied. A relocate connection supplied address is received by the originating port logical circuit as a result of an attempted connection to a subscriber which has been relocated or has invoked the call forwarding function. Upon receiving the line address and qualifier, the request logic interrogates the line status logic. The status logic circuits are arranged one per subscriber port and contain the busy idle status and relocate information for their associated port.

If the line address is qualified as a subscriber supplied address (assigned address), the request logic interrogates the status logic associated with the addressed line for relocate and busy idle status information. If "relocate" is active for the line, the status logic returns a relocate address to the request logic which transmits it to the originating port. The request logical circuitry is arranged then to cease busy indications and to reset. This would complete a relocate connection.

If relocate is not active but the line is busy, a negative response (interpreted as line busy) is transmitted to the originating port. This is followed by the ceasing of busy indications and a reset of the request logic thus ending the connection attempt.

If relocate is not active and the line is not busy, or if the line address is qualified as a relocate connection-supplied address (current address), the request logical circuit is arranged to send a connection request to the appropriate status logic. The busy status latch of the status logical circuit is set and a connection response is returned to the request logical circuit assuming no contention exists. If no response is received at the request logical circuit, another request logical circuit with higher priority has simultaneously requested connection to the same status logical circuit. This is treated the same as the previous line busy example since the line is now busy. Contention is treated in detail hereinafter. Assuming no contention, a positive response is transmitted from the request logical circuitry to the originating port logical circuit indicating that a connection is established and that the enable line to the four plane terminating group switch matrix is activated. The address controlling the connction was set up previously by the request logic in response to reception of the line address transmission.

Since a connection is made to the port logical circuit of the recipient, busy indications from the originating port logical circuit are now received indicating that a connection has been established. The recipient port logical circuit is arranged to transmit busy indications to the originating port. For a short period of time, the request logic continues transmitting busy indications which are "ORed" with transmissions from the recipient port. This is done to maintain a continuous busy indication transmission in the reverse control planes of the connection while the recipient port assumes the role of maintaining the connection.

The port logical circuits now communicate if necessary through the control planes of the switch and the corresponding subscribers are connected to the data planes completing the connection. The request logical circuitry monitors the forward control intermediate to terminating group link for busy indications, deactivating the switch matrix enable line when the indications cease. The status logical circuitry is arranged to monitor busy indications on the reverse control terminating group to port line, and to reset the line busy latch when the busy indications cease.

As mentioned previously, a relocate information circuit 820 is also part of the terminating group. Its purpose is to receive relocate information and forward it to the appropriate status logic circuit within the corresponding terminating group.

Some of the communication lines between the eight request logic circuits, and the four status logic circuits are shown in Fig. 8. A request line exists from each request logic circuit to each status logic circuit. A request is directed from a request logic circuit by the received line address to the appropriate status logic circuit. Requests for relocate and status information and requests for connection are made over these lines. A line from each status logic circuit is ORed to form a response line to each request logic circuit.

A response to the two types of requests is directed to the requesting request logical circuit according to the request line on which the request was received.

Fig. 1 shows a typical connection between two subscribers A & B. Note that the possibility of including a circuit between the port logical circuit interface of subscriber A and the terminating side of the switch is foregone. This could allow another subscriber to make a connection to the port logical circuit of subscriber A even though the latter is connected to subscriber B. In certain applications, this may be desirable and in others it may not. In the instant implementation, busy indications originating at the port logical circuit 100 are sent to the corresponding terminating group shortly before the connection procedure is initiated. The indications are detected by the status logical circuit associated with the port logical circuit 100 for setting a line busy latch. This action causes subsequent connection request on the port logical circuit 100 to establish a busy condition. If this type of operation is not desired, no simply busy indications are sent to the terminating group prior to originating a connection. In fact, sixteen subscribers capable of initiating connections only could be connected to the originating side of the switch, and 16 subscribers capable of terminating connections only could be connected to the terminating side of the switch. This would allow up to 16 simultaneous connections. These configuration considerations are application dependent and require no changes in the switch control logic according to the invention.

Switch group control logic operation

Originating group

A block diagram of an originating group is shown in Fig. 4. The basic function of this logic is to establish a connection between a port and an intermediate group upon receiving a terminating group address from the port and on the basis of status information from intermediate groups. The logic must also monitor busy indications which hold the connection until they cease, at which time it must break the connection.

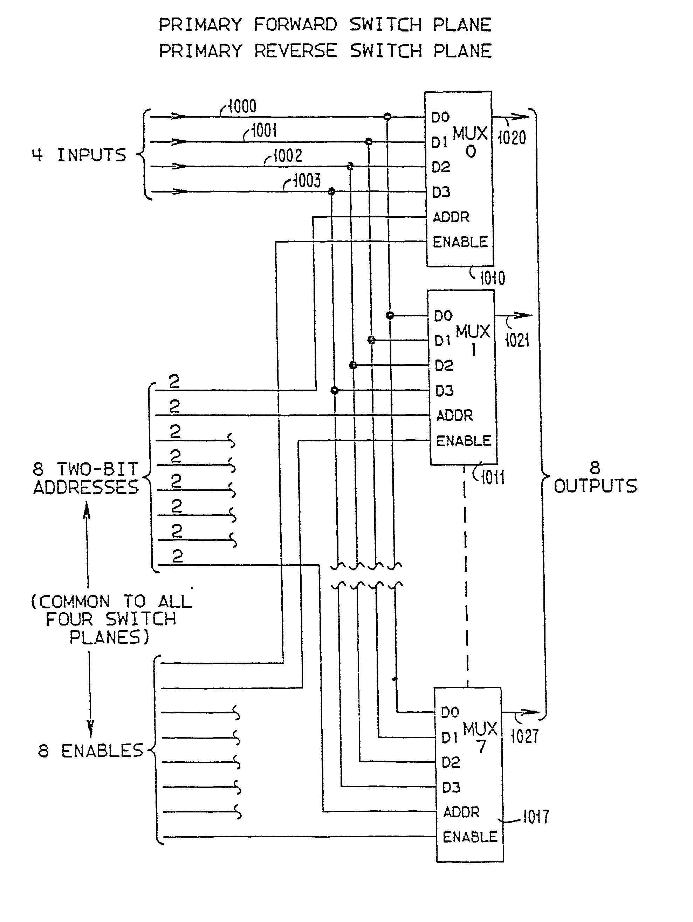

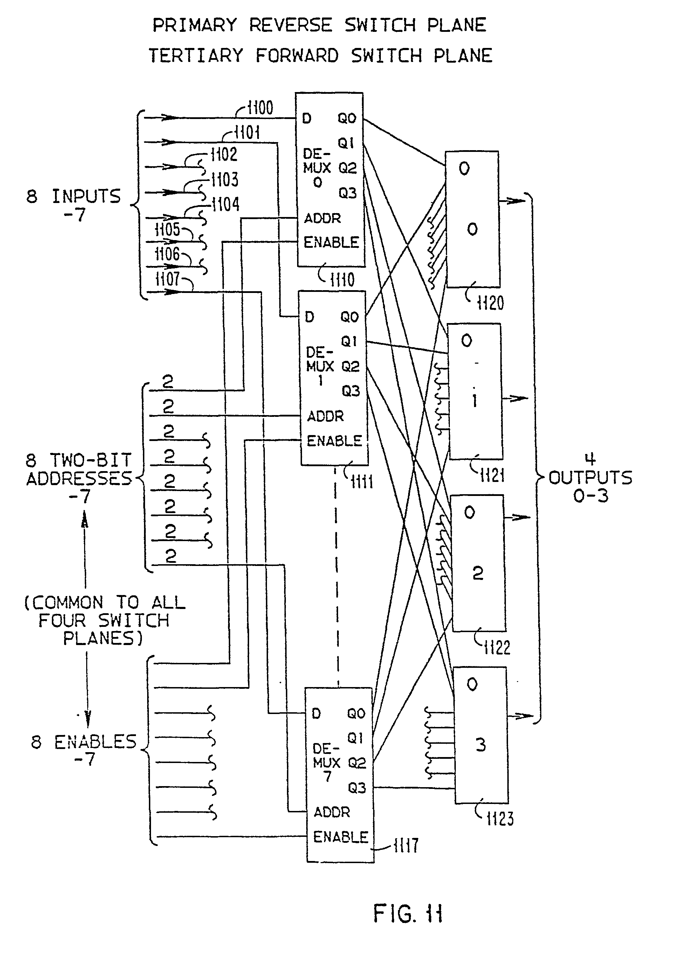

Fig. 10 shows the switch matrix incorporated in the forward control and data planes of the originating groups. Fig. 11 shows the switch matrix incorporated in the reverse control and data planes of the originating groups. Referring to Fig. 10, the 4 input lines 1000, 1001, 1002 and 1003 represent the forward control or data lines from 4 attached ports. The 8 output lines, of which but three 1020, 1021 and 1027 are shown, represent the forward control or data links to each of 8 intermediate groups.

In order to set up a connection from input X to output Y, a 2-bit address equal to X must be supplied to multiplexor circuit (MUX) Y. To enable the connection, an enable line to MUX Y must be activated. Addresses and enables to MUX's 0 through 7 are supplied by address registers 0 through 7 and enable latches 0 through 7 respectively. Therefore, a connection from input X to output Y is established by setting a value of X into register Y and setting enable latch Y. This holds true for both the foward control and data connections.

Referring to Fig. 11, the 8 input lines 1100—1107 represent the reverse control or data links from each of 8 intermediate groups. The 4 output lines 1120—1123 represent the reverse control or data lines to 4 corresponding ports. The parallel connection for the previously described input X to output Y forward plane connection is an input Y to output X reverse plane connection, since signals in forward and reverse planes travel in opposite directions.

In order to establish an input Y to output X connection De-MUX Y must be supplied an address equal to X and De-MUX Y enable line must be activated. If address register 0 through 7 and enable latches 0 through 7 connected to the MUX's in the forward planes were also connected to De-MUX's 0 through 7 in the reverse planes, an input Y to output X connection in the reverse planes could be establish by setting a value of X into register Y and setting enable latch Y. This is the same procedure which sets up the parallel forward plane input X to output Y connection.

Since forward inputs X and reverse outputs X are associated with port X, and since forward outputs Y and reverse inputs Y are associated with intermediate group Y, a connection from post X to intermediate group Y is established by setting a value of X into register Y and setting enable latch Y. This is the function of the originating group control logic. In Fig. 4, the switch matrices are represented by superimposed rectangles 400, 401, 402 and 403. The register 410 and enable latches 420 are arranged to control the matrices 400—403.

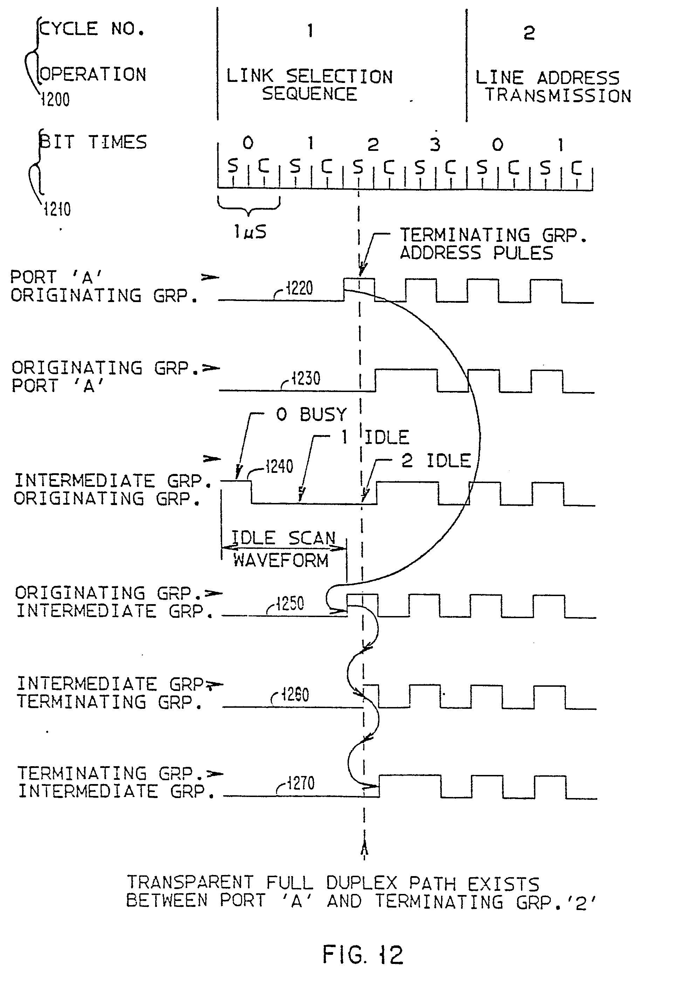

Fig. 12 is a timing diagram of the Link selection sequence of a connection between a port 20A and a port 20B. Link selection establishes a connection from port A to the terminating group of port B. In this case, the terminating group address of port B is transmitted from port A, by generating a pulse during the S portion of time slot 2 as represented by a curve 1220. This is received over the forward control line by priority encoder circuit 430 which generates a binary address equal to the line number of the originating port. This address is available at the group of selectable registers 410.

Simultaneously presented to the originating group over the reverse control links from one or more intermediate groups is the idle scan waveform timeslot associated with the addressed terminating group to intermediate group link. One such idle scan waveform is represented by curve 1240. These waveforms are received by priority encoder 440 which generates a binary address equal to the address of the lower order intermediate group presenting a link idle indication. This address is used to select which register 410 will be loaded with the originating port line address generated by the priority encoder circuit 430.

Since circuits 430 and 440 both have active inputs (a terminating group address for the former and, at least one idle indication for the latter) the AND gating circuit 450 is raised to load a register in circuit 410. If the originating port line address is equal to X and the lowest order intermediate group to provide an idle is equal to Y, an address of X is loaded into register Y. This completes the address setup requirement of the matrix for an originating port to intermediate group connection.

The output of the AND gating circuit 450 also gates a decoder circuit 460 which sets an enable latch Y, since the decoder binary input comes from circuit 440 which has an output presently equal to Y. This completes the enabling of the previously addressed connection. The enable latch 420 being set also disconnects intermediate groups Y's reverse control transmissions from circuit 440 for the duration of the connection. The output of the AND gating circuit 450 also gates decoder 470 which sets request accepted latch X since circuit 430 is presently generating a value of X. The output of the request accepted latch circuit 480 inhibits the originating port X from generating erroneous requests for the duration of the connection.

At the time the connection was enabled, the pulses of waveform 1220 in Fig. 12 are switched from the originating port to the selected intermediate group generating waveform 1250. Subsequent connection sequence details are described in following sections covering the intermediate and terminating group control logic.

The terminating group address pulse is the first pulse in a sequence of busy indications transmitted by the port as represented by curve 1270. If the busy indications should cease during the remainder of the connection or after a connection has been established, request accepted latch X, circuit 480 and enable latch Y, circuit 420 will be reset since both sample the forward control plane of the connection during the S portion of time slots. Request latch X resetting allows further requests from port X to be accepted. Enable latch Y resetting allows the link to intermediate group Y to be considered for use in subsequent connections and causes the switch matrix to be disabled, breaking the connection path in the originating group.

Intermediate group

A block diagram of an Intermediate Group is shown in Fig. 5. The basic function of this logical circuit is to establish a connection between an originating group and a terminating group upon receiving the remainder of an intermediate group address pulse as represented by curve 1250 of Fig. 12 from an originating port through an originating group. Upon establishment of the connection, it must monitor busy indications which hold the connection until they cease, at which time it must break the connection. The logic must also transmit idle scan waveforms over all idle links to originating groups.

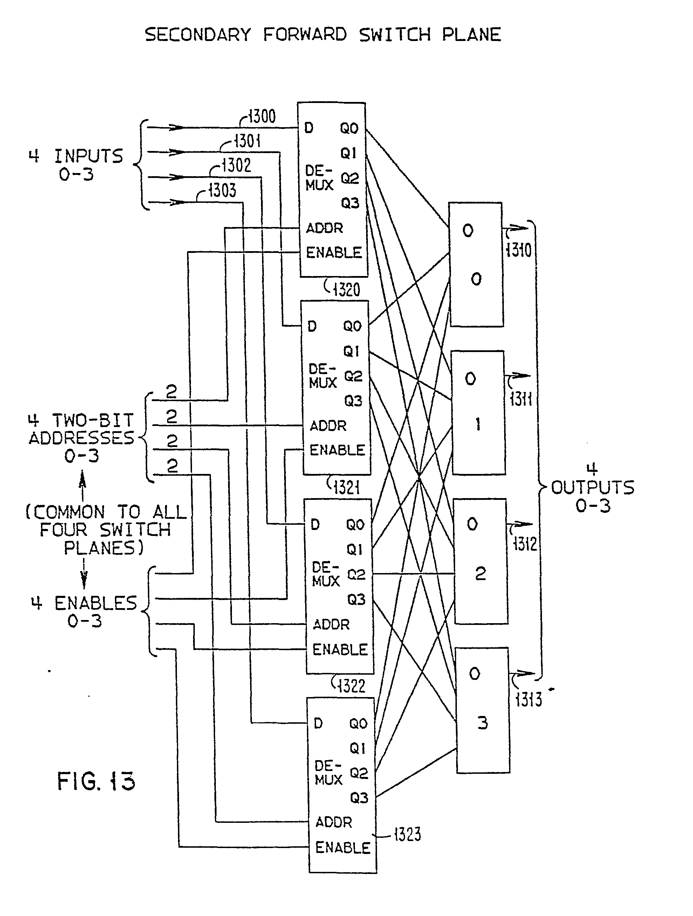

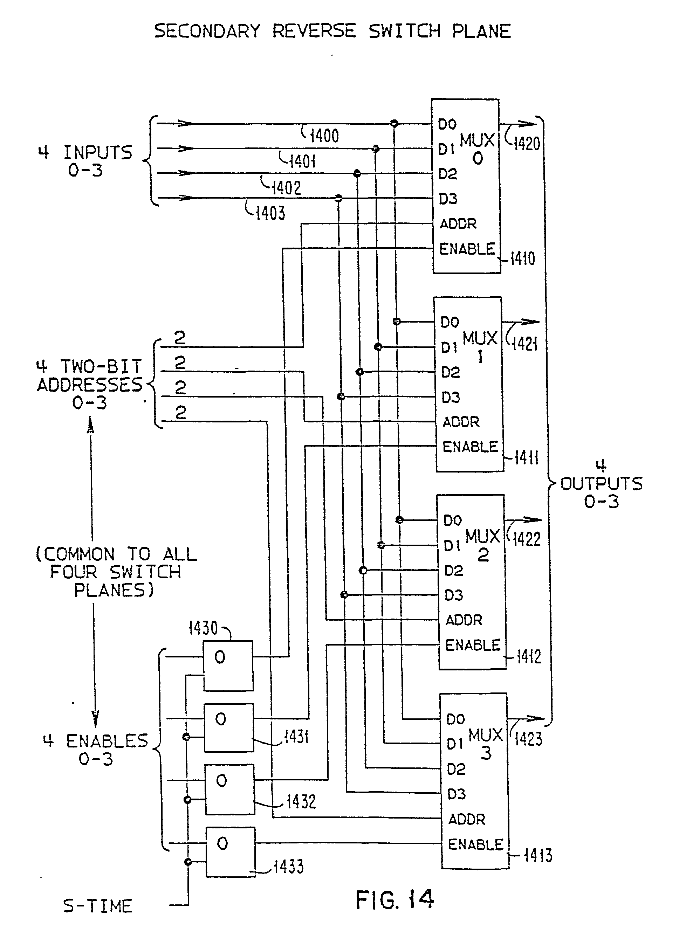

Fig. 13 shows the switch matrix incorporated in the forward control and data planes of the intermediate groups. Fig. 14 shows the matrix incorporated in the reverse control and data planes of these groups. Referring to Fig. 13, the 4 input lines 1300—1303 represent 4 control or data links from the 4 originating groups. The 4 output lines 1310—1313 represent 4 control or data links to the 4 terminating groups. Referring to Fig. 14, the 4 input lines 1400—1403 represent 4 control or data links from the 4 terminating groups and the outputs represent links to the 4 originating groups. The two types of matrices share common addressing and enabling lines. The addresses are provided by four 2-bit address registers 0 through 3 and the enables are provided by four enable latches 0 through 3. This arrangement of common addressing and enabling of forward and reverse planes is the same as that described earlier for the originating groups. Also, in a manner similar to the originating group matrices, it can be demonstrated that in order to establish a connection between originating group X and terminating group Y it is necessary to set an address equal to Y into register X and set enable latch X. This is therefore the function of an intermediate group in establishing an X to Y connection.

Referring to Fig. 5, the first operation to be described is idle scan waveform generation. The generation of the idle scan waveform was earlier defined as a commutating action in the intermediate group reverse control switch planes. This action assembles the S portions of reverse control terminating group to intermediate group transmissions into a single time division multiplexed signal which is distributed to all originating groups where an idle link exists to do so. The transmissions received from terminating groups 0 through 3 are assigned time slots 0 through 3 of the idle scan waveform, respectively. Since the commutation is only enabled during S portions of time slots, the idle scan waveform is composed of the presence or absence of busy indications from a given terminating group during its respective time slot. Thus, an originating group observing the idle scan waveform received from a given intermediate group knows the busy idle status of all links from that intermediate group to terminating groups.

The commutating action is generated as follows. Referring to Fig. 14 each of the four reverse switch plane output lines 1420—1423 is controlled by a MUX (multiplexor) circuit 1410—1413 which selects one of four input lines 1400—1403 controlled by its respective address register 0 through 3 and enable latch 0 through 3. Assume this figure represents the reverse control matrix. The MUX associated with each output line that is part of an idle link to an originating group must provide a commutating action. The address registers associated with such MUX circuits must provide an address equal to 0 during time slot 0, and address of 1 during time slot 1, and so forth, in order for the desired commutation to occur. The four OR gating circuits 1430—1433 on the MUX enable lines provide the necessary enabling during S portions of the time slots. The reverse data plane need not be enabled during S time; however, it may be if it is inconvenient not to. A register circuit 510 in Fig. 5 contains the individual address registers.

Each of the registers is provided a binary clock pulse train as an input. The binary clock train is synchronized with the time slots and thus represents the addressing necessary for commutation. Each individual register has a gate line which causes the output of a register to follow the input thereof as long as the line is activated. Each register 0 through 3 has a gate line which is derived by way of an inverting circuit 520 for inverting the output of enable latches 530, 0 through 3, respectively. Thus, as long as an originating to intermediate link does not have a connection associated with it, the respective enable latch 530 is not set causing the respective address register 510 to follow the binary clock signal resulting in a commutating action in the respective MUX circuit 1420—1423 as shown in Fig. 14. When a connection over a given link is established, the associated enable latch 530 will be set causing the commutating action to stop with the last commutation address trapped in the respective address register 510.

Circuit connections through an intermediate group are established as follows. Referring to Figs. 5 and 12, particularly curve 1250, the remainder of a terminating group address pulse is received from originating group X over the forward control plane of link X. This pulse is received by a priority encoder circuit 540 on its input X causing it to generate a binary address equal to X. The address is in turn decoded by a decoder circuit 550 to produce a set pulse to enable latch X in the enable latch circuit 530. The decoder enable line is gated at AND gating circuit 560 by the ORed output of the encoder 540, which indicates the presence of an address and "S-time delayed", which allows the address outputs of the priority encoder 540 to stabilize.

Since enable latch X has been set, the current address Y contained in address register X is trapped and the four-plane connection path is enabled, thus completing a connection from originating group X to terminating group Y. The address trapped in register X is equal to Y since the terminating group address pulse for group Y occurs during time slot Y coincident with the commutation of terminating group Y. The set condition of the enable latch also prevents subsequent information on link X from reaching input X of the encoder circuit 540.

In summary, terminating group Y is commutated during time slot Y to all originating groups. An originating port attached to originating group X, desiring a connection to terminating group Y, transmits a pulse also during time slot Y. Originating group X, upon receiving simultaneously the pulse from the originating port and the terminating group Y commutation from one or more intermediate groups, establishes a connection to a suitable intermediate group. This connection occurs during the first half of the S portion of time slot Y so that the remainder of the pulse from the originating port arrives at the selected intermediate group on its input X. Since the intermediate group receives the pulse on its X input, enable latch X is set, trapping the current commutation address Y in register X and enabling the originating group X to terminating group Y connection.

Once a connection is established, the remainder of the original pulse sent from the originating port (terminating group address pulse) is passed through the transparent intermediate group connection to the terminating group as shown by the curve 1260. The function of the intermediate group regarding the connection now is to monitor busy indications and reset the enable latch when they cease, breaking the connection. This is accomplished by sampling the forward control plane of the connection at S-time generating a reset to the enable latch in the latch circuit 530 if a busy plate is not present. When a reset of the enable latch occurs, the switch planes for the connection are disabled, commutation on link X continues, and the link X input to priority encoder 540 is reestablished allowing subsequent connections to occur on link X.

Terminating group

The terminating group consists of an arrangement of eight "line request logic circuits", 800—807, one per link, and four "line status logic circuits", 810—813, one per line. (Fig. 8) The function of the "status logical circuitry" is to maintain the current busy/idle status of its associated line to a subscriber port, store the relocate information presented by the "relocate information logical circuit 820", and present this information to "request logic circuits" upon demand. The relocate information logical circuit referred to receives relocate information on a serieal bus connected to all terminating groups and routes it to the appropriate "status logical circuit" for use. The function of the "request logical circuit" is to detect connection requests to receive a line address and address qualifier to interrogate the appropriate "status logical circuit" and, based on "status logic circuit" responses, to make a connection to a subscriber port, and to return a line busy indication or relocate address to the originating port logical circuit.

Figs. 10 and 11 show the matrices incorporated in the reverse and forward control and data planes of the terminating groups. As in the originating and intermediate groups the forward and reverse planes are controlled by common addresses supplied by address registers and common enable pulser supplied by enable latches. One address register and enable latch is controlled by each "request logical circuit" to establish connections from a "request logical circuit" associated link to one of four lines to attached port logical circuitry. If, for example, the "request logical circuit" 6 sets a value of 2 in its address register and turns on its enable latch, a connection will exist between the link 6 and the line 2.

Fig. 9 shows the switch planes 900, 901, 902 and 903 associated with a termination group. Eight links are switchable to one of four lines to ports under control of eight 2-bit addresses and eight enables as previously described. The reverse control plane 901 of the eight links to intermediate groups are ORed with eight "reverse out data" lines before leaving the group. Each of the eight revese out data lines is generated by a "request logic circuit" which uses its line for the purpose of transmitting connection information to the port originating the connection. (Connection information transmitted from the terminating group consists of a connection verification pulse followed by busy indications with positive or negative status or a relocate address time multiplexed).

Line request logic

Referring to Fig. 6, "line request logic" for link X, the input "forward control in X" line 660 is the forward control link from intermediate group X to the terminating group switch matrix. The link is monitored by the "request logical circuit" for busy indications and connection information from the originating port. The curve 1260 in Fig. 12 represents the information received on this link. The first pulse received during the last part of the S portion of time slot 2 (the remainder of the terminating group address pulse) causes a busy latch 610 to set, initiating a cycle counter 620 and causing the subsequent circuitry to generate a "connection verification" pulse during the C portion of time slot 2 followed by busy indications. (Waveform) From this time until the end of the connection, the busy latch 610 remains set by busy indications gated into the latch during each S time. Failure to receive a pulse during S time causes the latch 610 to be reset, restoring the "request logical circuit" to an idle state. The cycle counter 620 starts counting cycles when the busy latch 610 is set. A cycle consists of time slots 0, 1, 2 and 3. Another latch is held reset until the busy latch 610 is set. The C slot time following the set of the busy latch 610 is gated through an AND gating circuit 614, another AND gating circuit 616 (since latch 610 is not yet set) and an OR gating circuit 618 to the reverse out data line 620. This signal is propagated through the reverse control plane connection to the requesting part logic and constitutes the connection verification pulse. At the end of C time, the latch 610 sets allowing the immediate and subsequent S-time pulses to be gated through an AND gating circuit 622 and the OR gating circuit 618 to the reverse out data line 620 constituting the "busy sequence".

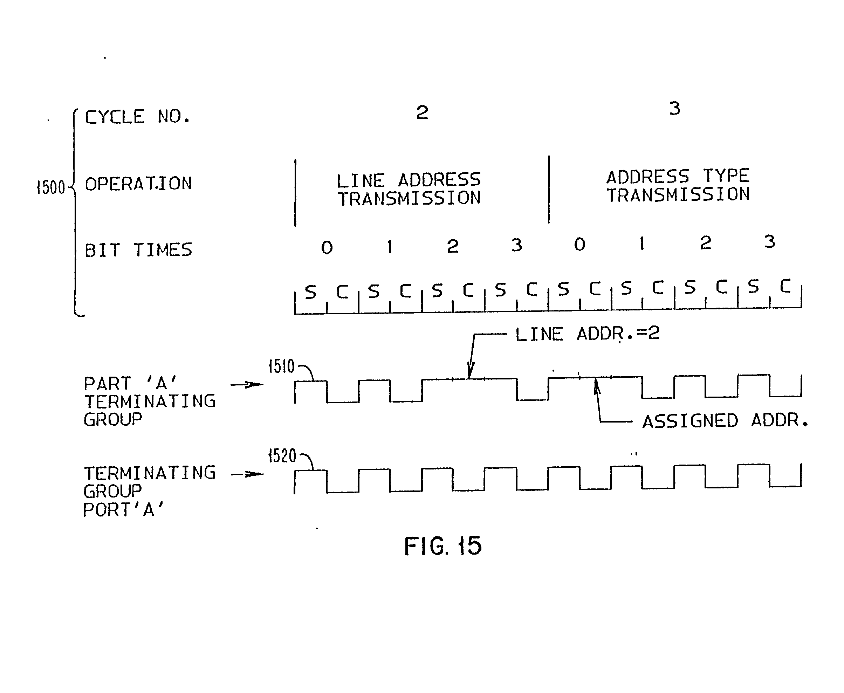

The cycle counter 620, in the control circuit steps at the beginning of each time slot 0. At this point no further action is taken by the request logic until the cycle counter 620 steps indicating the beginning of the "line address transmission" cycle. Fig. 15 comprises two curves 1510 and 1520 representing the "line address" and "address type transmission" cycles. Since the originating and intermediate groups are transparent only the transmissions between the originating port and terminating group are shown.

A binary clock running in synchronism with the transmission time slots is provided to an address register 626, as the data input. A load line to the register 626 is developed by the control circuit during the line address cycle when a C pulse (a pulse during the C portion of a time slot) is received from the originating port logical circuit. In the case represented by the curves in Fig. 15, the pulse is received during time slot 2 causing the address register to be loaded with a value equal to 2, which is the line address.

At the beginning of the next 0 time slot, the cycle counter 620 advances to indicate the "address type transmission" cycle. During this cycle the control activates the clock line of the Assigned/Current address latch 630 at C time of time slot 0. If the address used by the originating port in making the connection was subscriber supplied and not relocate connection supplied, the port will transmit an up level during the C portion of time slot 0 causing the latch 630 to set, indicating assigned address as the address qualifies.

During the last half of the address type cycle, a request for relocate information is made by the control circuit in Fig. 6 if the A/C latch 630 is set. The request is directed to the appropriate "status logic" circuit by the decoder circuit 634 which is controlled by the address register 626 containing the line address. A time multiplexed 2-bit response is received from the "status logical circuitry" over the "Response X" line and is loaded into two latches, 636 and 638, by the control circuit. The "line busy" latch 636 is set if the status logic returns no response, indicating the status logic is busy responding to a higher priority request. (This condition is equivalent to an actual line busy). If the status logic responds, the line busy latch is not set and the "Relocate" latch 638 is set if relocation is active for the addressed line. This completes the address type transmission cycle. As mentioned previously, if the A/C latch 630 is not set no request for relocate information is made since a current address cannot be relocated (A current address is one supplied by a connection to a relocated line).

The output line 641 of cycle counter 620 indicates the "line address" transmission cycle. A pulse during the C portion of a time slot during this particular cycle will raise an AND gating circuit to generate a load pulse to a line address register 626. The bit time 0 and 1 pulse causes the cycle counter circuit 620 to advance to cycle 2 indicating address type transmission cycle.

During the C portion of bit time 0, a pulse is generated on the raising of an AND gating circuit 646 to the clock input of an A/C latch 630. This causes the received assigned or current address type to be latched by the A/C latch 630.

During time slots 2 and 3 of the cycle, a request for relocate information is made if the A/C latch 630 has been set, indicating an assigned and therefore relocatable address. The raising of an AND gating circuit 648 generates a pulse through an OR gating circuit 650 to enable the decoder circuit 634. The line address register directs the decoder circuit 634 to provide a pulse to the appropriate "line status logic" circuit. Assuming a request is made, the raising of AND gating circuits 652 generate clock pulses for the "line busy" and "relocate" latches 636 and 638 during time slots 2 and 3, respectively. The line busy and relocate information is gated into these latches from the response line 656' driven by the selected "line status logic" circuitry.

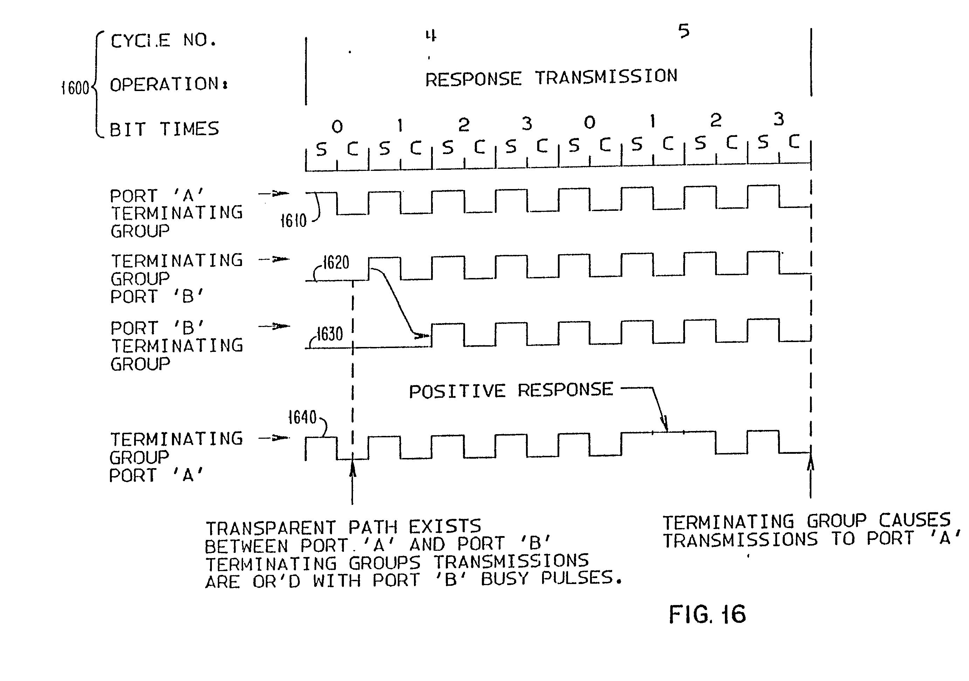

Fig. 16 comprises curves showing the "response transmission" cycles during which the request logic circuitry transmits information to the originating port logical circuitry indicating the result of the connection request. Again these cycles are defined by the stepping of the cycle counter in the control circuit of Fig. 6. Transmissions between a terminating group and a terminating port (port B) are now included with originating port (port A) and terminating group waveforms since they begin during response transmission cycles. Three different conditions can exist at this point in the connection resulting in three different actions. The conditions are relocate, line busy and line idle (connection to be established). The three will be described separately in that order.

If the line busy latch 636 was noh set and the relocate latch 638 was set during the previous cycle, the control circuit initiates a relocate operation. A relocate address is transmitted from the status logic which was previously interrogated for relocate information. The transmission is a serial 4-bit word transmitted during the C portions of the first four time slots of the response transmission cycles. The control circuit receives this transmission and multiplexes it between S pulses of the busy indication transmission over the "Rev Out Data" line to the switch matrix. As mentioned previously, all transmission from the terminating group to the originating port are made over the "Rev Out Data" line.

Time slots 0 and 1 of the second half of the response transmission are used to transmit the busy, idle or relocate status to the originating port. A pulse in the C portion of time slot 0 indicates busy (no connection is made). A pulse in the C portion of time slow 1 indicates not busy (a connection is established). No pulse during either time slots C portion indicates the first four time slots of the response transmission contained a relocate address. So, in this case, no "status pulses" are sent. The originating ports always receive the first four bits of the response transmission and assume it is a relocate address until the status pulses are received. If a busy or not busy is received, the relocate address received by the port is ignored. If no status pulses are received, a relocate is active and the received address is used in setting up a subsequent connection.

After the status pulse transmission time slots, the control circuit ceases busy indication transmission and resets. This causes the existing relocated connection to be broken and completes the function of the terminating group for the connection.

The first cycle counter 620 now steps to cycle 3, the response cycle. Assuming the relocate latch 638 was set previously, the line status logic will send a relocate address over the response line 656. This signal is gated through circuits 618 and 658 to the Rev Out Data line 620.

The cycle counter 620 now steps to cycle 4. At this point a busy or not busy indication is normally generated during time slots 0 and 1 respectively. These signals are blocked at an AND gating circuit 660 during call rearrangement. During time slot 2, an OR gating circuit 662 and an OR gating circuit 664 will generate a reset to the "busy latch", resetting the line request logic circuit, and breaking the connection.

The next possible condition to be described is busy. A busy condition can occur two ways. If the line busy latch 636 is set as a result of a request for relocate information a busy condition exists. If the line busy latch 636 is not set and the relocate latch 638 is not set as the result of a request for relocate information, or if relocate information is not requested as a result of a connection being made with a current address, a request for connection is made to the appropriate status logic circuit. The request may result in the second type of line busy condition if the line the request for connection is made to is in fact busy. The two types of busy will be described separately.

If a request for relocate information results in the line busy latch 636 being set, the control logic continues to transmit busy indications during the first half of the response transmission cycles. The second half of the cycle will contain a pulse during the C portion of time slot 0 indicating a busy condition (negative response) to the originating port. The control circuit then ceases busy indication transmission and resets. This breaks the connection and completes the function of the terminating group in the connection attempt.

If a request for relocate information results in neither the relocate 638 nor busy latches 636, 610 being set, or if no request is made, a request for connection is made to the appropriate Status Logic circuit. This request is directed under control of address register C in the same manner as a request for relocate information. The request is made during the first two time slots of the first response transmission cycle. A response pulse is received on the "Response X" line if the addressed line is not busy and no higher priority request for connection is being made simultaneously. The pulse or absence of a pulse is presented to the line busy latch 636 through an inverting circuit 654 and is clocked into the latch by the control circuit. Thus, if a pulse is received, the line busy latch 636 is not set and, if a pulse is not received, the latch 636 is set.

In this case the response pulse is not received and the busy latch 610 is set. The action of the control circuit is now identical to the previous busy case. A pulse in the C portion of time slot 0 in the second response transmission cycle indicating busy to the originating port is transmitted. This is followed by the ceasing of busy indications and the resetting of the control circuit, thus breaking the connection and completing the function of the terminating group in the connection attempt.

If the relocate latch 638 is not set but the line busy latch 636 was set due to contention during a request for relocate information, then no action is taken during cycle 3. During cycle 4, a busy indication is generated by AND gating, OR gating and AND gating circuits 656 and 660 and is propagated to the Rev Out Data line 620 through the OR gating circuit 658. During time slot 2 of the cycle, gating circuits 654 and 670 generate a reset to the line busy latch 636 resulting in the line request logic breaking the connection.

If the relocate and line busy latches 638 and 636 are not set, then during cycle 3 a connection request is generated during time slots 0 and 1 by way of an AND gating circuit 674. The request is propagated to the line status logic through an OR gating circuit 650 and the decoder circuit 634. If the requested line is busy, a down level will be present on the response line as a result of the request. During time slot 1, AND gating and inverting circuits 662 and 664 generate a set pulse to the line busy latch 636.

During cycle 4 the operation will proceed the same as the previous busy case since the line busy latch 636 has been set.

The last case to consider is the no relocate, not busy condition, which results in a connection. The waveforms in Fig. 16 are useful in an understanding of this case. As previously mentioned, if a request for relocate information results in no relocate and not busy, or if no request for relocate is made, a request for connection is made. This request results in a response pulse being received which causes the line busy latch 636 not to be set if the addressed line is in fact not busy and no contention exists. The request for connection has already been described and in this case results in the line busy latch not being set.

Since the line busy latch 636 is not set, the control circuit activates its "Enable X" line during the C portion of the first time slots of the response transmission cycle. Address register 626 was previously set with the line address which is presented to the terminating group switch matrices over the "Addr X" lines of the request logical circuitry. Thus, upon activating the enable line, the request logic has established a connection between the originating port (port A) and the terminating port (port B). Port B receives the busy indications from port A through the terminating group connection at this point, as is represented by the curve 1520 of Fig. 15. Port B interprets this as an incoming connection and responds by sending busy indications to port A. This is represented by curve 1530. Port B's busy indications are ORed temporarily with the remainder of the request logic transmission to port A by way of an OR gating circuit 910 shown in Fig. 9.

A pulse during the C portion of time slot 1 (positive response) is transmitted to the originating port during the last half of the response transmission cycles (waveform D). This indicates to port A that port B was not busy and has been connected. At the end of the response cycles, the request logic ceases all transmissions and only monitors busy indications from port A. The function of the terminating group in setting up the connection is complete. When busy indications from port A cease, busy latch 610 in Fig. 6 will be reset causing the control circuit to be reset, deactivating the "Enable X" line and breaking the connection.

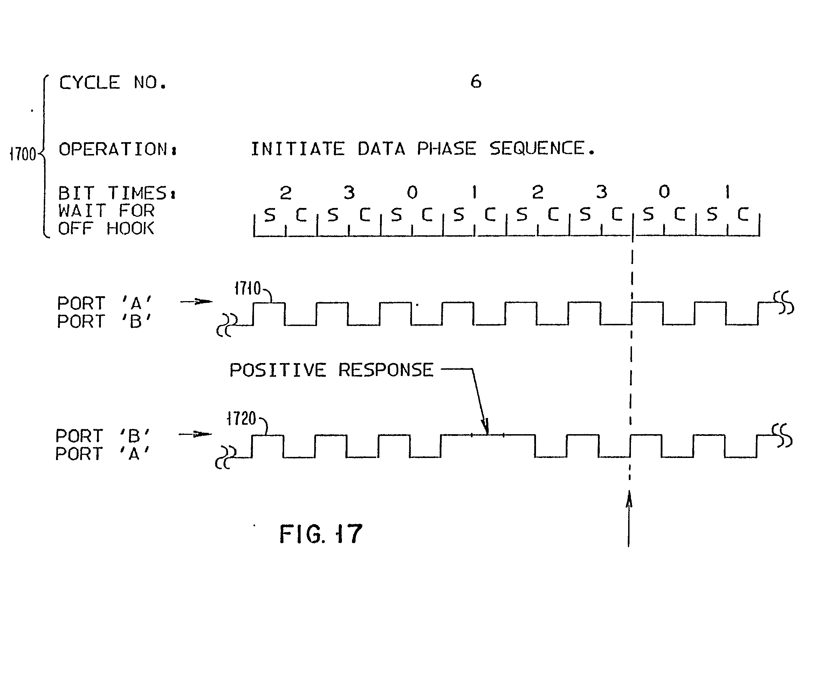

At this point both ports know they are involved in a connection, but the attached devices of the subscriber may need to communicate before data is actually exchanged through the switch connection. Assuming the devices are telephones, upon receiving busy indications, port B (Fig. 16, curve 1635) would cause its telephone to start ringing. When port A receives the positive response status pulse (waveform D), it would send a ringback tone to its telephone. At this point the ports would not want their attached telephones to communicate. However, when the port B telephone is answered, a positive response status pulse could be sent to port A indicating a desire to communicate, as indicated in Fig. 17. Port A would stop the ringback tone to its telephone and both ports would then connect their telephones to the data planes of the established connection. This example demonstrates the use of the control planes of the switch once a connection is established. It is a function of the ports and not the switch groups, and its exact form is determined by subscriber device requirements.

If the relocate and busy latches 638 and 636 are not set, and if during a connection request in cycle 3 the requested line is not busy, then the status logic will return an up level on the response line 656. Thus the circuits 654 and 670 will not cause the busy latch 636 to set. Also, during time slot 0 circuit 23 causes an "enable" latch 680 to set, thereby enabling the final stage in the 3-stage connection between port logic circuits and end subscribers.

During cycle 4, time slot 1, a not busy indication is generated by circuits 682, 658 and 660 and is propagated to the Rev Out Data line 708 through the OR gating circuit 658. The cycle counter 620 then steps to a null state and remains in the state until the line request logic is reset at the time the connection is broken.

The only action taken by the line request logic at this point is to monitor busy indications for an interruption. This is done by the busy latch 610 which resets in the absence of busy indications causing the line request logic circuits 800—807, Fig. 8 to reset, breaking the connection. The reason the connection is broken is due to the reset of the enable latch 680.

Line status logic

The operation of the Line Status Logic in response to request logic relocate information and connection requests will now be described.

Each Status Logic circuit Fig. 7 has eight "Request" input lines, one from each request logic circuit. These lines are inputs to a priority encoder 750 that generates a 3-bit "Requestor Addr" and a line indicating a request is present. (Request Present) Request inputs 0 through 7 from request logic circuits 0 through 7 are connected to priority inputs 0 through 7 which generates addresses with binary values of 0 through 7, respectively. Decoders 760 and 770 use the generated requestor addresses 0 through 7 to direct responses and relocate addresses to OR gating circuits 820—827, Fig. 8, and therefore to request logic circuits 0 through 7, respectively. In this manner, responses are directed to the requesting request logic circuit only.

The "Relocate Addr X" and "Relocate Active X" lines come from the relocate information logical circuitry 820. If relocate is active for the line associate with a status logic circuit 810—813 its relocate latch line 830—833 will also be active. In addition, the relocate address line contains a bit serial representation of the relocate address in the form required for ultimate transmission to the originating port. The serial address is repeated continuously so it is available every time slot cycle.

Requests received by the status logic are either requests for relocate information or requests for connection. Requests for relocate information always occur during time slots 2 and 3 of a given cycle. Requests for connection always occur during time slots 0 and 1 of a given cycle. Thus, the requests being received on the same set of lines are differentiated according to the time they are received. The relocate information request will be described first.

A pulse is received from request logic X on request line X of a status logic circuit during time slots 2 and 3. The control circuit of Fig. 7 generates a gate to encoder 750 during the C portion of time slot 2 if the relocate latch line is active. It also generates a gate during the S portion of time slot 3. Each time a gate is generated to the priority encoder 750, an address and request present line are generated causing B to send a pulse to the requesting request logic circuit of Fig. 6. These pulses cause the relocate latch 638 in the request logic circuit to set if a relocate line is active and cause a busy latch 610 not to be set. If relocate was not active, the operation of the status logic is complete.

The outputs of the priority encoder 750, during the request cause the requestor address to be stored in latched decoder 770. If relocate was active during the request, the relocate latch 638 in the requesting request logic is set causing the request logic to transmit the information present on its response line to the originating port during the C portions of the following time slots 0 through 3. It is the function of the status logic to provide the bit serial relocate address in proper form during these time slots on the response line to the request logic. The control circuit accomplishes this by gating the latching decoder 770, thus directing the relocate address present on the Relocate Addr X line to the requesting request logic whose address is stored in the decoder 770. This completes the operation of the status logic for relocate information request. The control circuit does not activate the gate to the priority encoder 750 during time slots 2 and 3 of a relocate transmission cycle. A request logic circuit, Fig. 6, making a request for relocate information at this time receives no response, which is interprets as a busy condition. This was mentioned in the request logic circuit hereinbefore. During time slots 0 and 1 of a relocate transmission, requests for connection can be responded to since a separate decoder 760 is used to direct the response. Note, however, that the outputs of the priority encoder 750 in this case will not disturb the address in the decoder 770 since the "Xmit Relocate Addr" which gates the relocate address also blocks the load line of the decoder 770.

The busy idle status of the line associated with a status logic circuit is reflected in the state of the "Line X Busy" latch 730. The latch 730 is set when busy indications are received from the terminating port over the reverse control line by an "AND" circuit 780. If busy indications are not present, circuits 782 will cause circuit 730 to reset. As previously described, when a port originates a connection it may also transmit busy indications to its terminating group, thus setting the line X busy latch 730 in the associated status logic circuit, preventing incoming connections. Upon completion of the connection, busy indications would cease resetting the line X busy latch 730 allowing incoming connections once again. The latch 730 can also be set by the control circuit as the result of a request for connection. Once the latch 730 is set, however, it must be maintained by busy indications from the terminating port. These indications start during the request for connection when the request logic receives a not busy response, enables the terminating group connection, thus signalling the terminating port a connection is being made to it. The port responds with busy indications which maintain the line X busy latch 730 in the set condition until signalling the end of the connection by ceasing. The busy latch 730 being reset allows subsequent connection to be made.

A request for connection consists of a pulse during time slots 0 and 1 of a cycle. The encoder 750 and the decoder 760 function in the same manner as that described for a request for relocate information. Thus, a response pulse is directed to the requesting request logic circuit when the gate line of the priority encoder 750 is activated.

The control circuit of Fig. 7 activates the gate line during the C portion of time slot 0 and the S portion of time slot 1 if the busy latch 730 is not set. Therefore, if the request logic receives a response pulse, its busy latch is not set and it enables its connection. In this case the control circuit would set the line busy latch 730 at the end of the request pulse so that subsequent request for connection would encounter a busy condition. A request logical circuit 800—807, Fig. 8, that receives no response pulse when making a request for connection sets its busy latch. This is the result of a previous connection being made to the line, the line being busy due to the associated port originating another connection (when this mode of operation is desirable) or a higher priority request being received simultaneously. This completes the function of the line status logic circuitry.

Disconnect operation

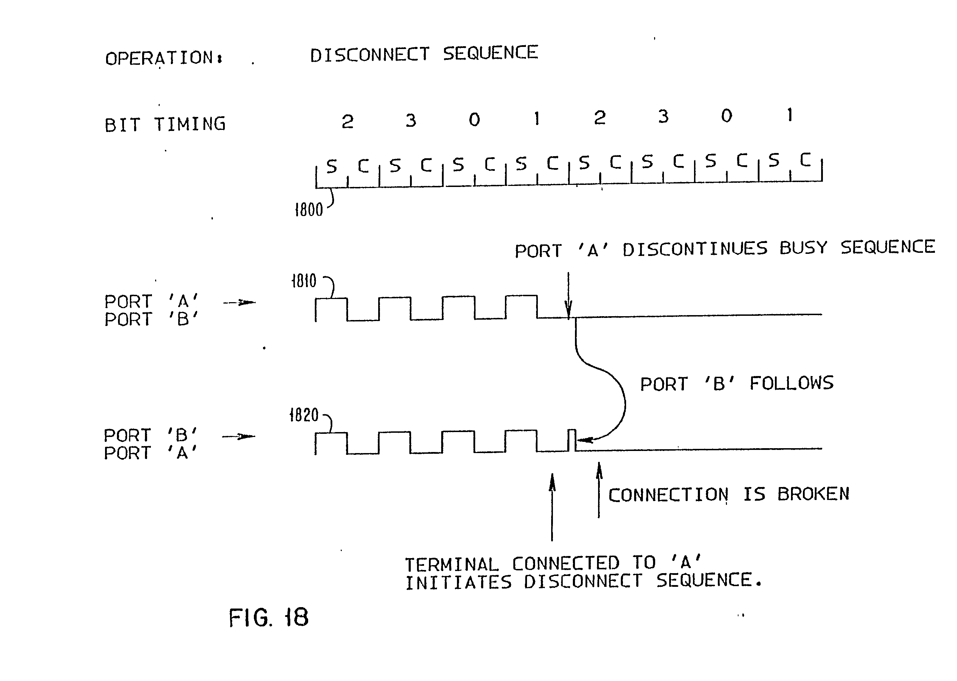

Fig. 18 is a graphical representation showing the busy sequences transmitted between an originating port A and a terminating port B. (Port A and port B respectively). These sequences are monitored by those stages of switching involved in a connection and, as long as they continue, the connection path is maintained. Each port logical circuit, in addition to transmitting its own sequence, monitors the sequence generated by the other. During the connection set up, the terminating group request logic also participates in sequence generation until the connection attempt is terminated or the terminating port begins transmitting its sequence.

The sequence consists of pulses during the S portion of each time slot. (The C portion being reserved for connection information transmission) A port will cease transmitting its sequence when its attached subscriber indicates a desire to break the connection, as shown by curve 1810. The ports monitor busy indication during the first half of S time and truncate their own busy sequence immediately upon detecting the absence of a received sequence. (Lower waveform) The switch groups monitor busy indications during the last half of S time and disable their connections immediately when indications are no longer detected.

Therefore, Figure 18 is a graphical representation showing port A initiating a disconnection, a port B following and, at the end of the S portion of the time slot, all connections in the associated switch path are disabled. All links and the involved ports are now free for other connections.

Contention

In the process of setting up a connection in the switch, actions are initiated which result in a response if the result is successful, or no response otherwise. No response indicates the failure of the switch to respond in the desired manner and is the result of simultaneous request to a single circuit for a given action. One type of request for action is the transmission of a terminating group address by an originating port. This is a request for a connection through the originating and intermediate switch groups to the addressed terminating group. If the action is carried out successfully, a connection verification pulse is received by the originating port from the addressed terminating group. If contention was encountered from a higher priority request in either the originating or intermediate groups, the connection is not established and no verification pulse is received. The originating port would then break the partial connection by failing to initiate a busy indication sequence and retry the connection during the next time slot cycle. This type of contention is referred to as link contention since it involves the selection of links to create a switch path.

The second type of contention occurs within a terminating group and involves the line request logic requests to the line status circuits. A request for relocate information or a request for connection can be made from separate request logic circuits within a terminating group to the same status logic circuit simultaneously. This results in what is called status logic contention. This type of contention differs from link contention in that no retry is required. Contention for relocate information implies a line busy condition since a higher priority request is either about to make a connection or be relocated to a new location where it will make a connection. In any case, a connection will be established to the desired line by the higher priority requestor making the line busy. Contention for a connection implies a busy condition for the lower priority requestor also since a connection to the desired line is about to be made. Thus, an originating port receives a line busy response to its connection attempt when status logic contention is encountered.

Link contention

Referring to Fig. 4, requests for connection from originating ports in the form of terminating group address pulses are received in the originating group priority encoder circuit 430. The priority encoder 430 has four input lines 0 through 3. If input line X is activated, a binary value equal to X is generated as an output and a connection from line X to an intermediate group is established. If simultaneous pulses are received by the encoder 430, only the lowest order line is considered by the encoded 430. Therefore, a connection is established only from the lowest order requesting line to an intermediate group. The other request(s) are ignored and result in the respective ports receiving no verification pulse. Contention is assumed by the ports and retry connection attempts are made. Contention exists in the primary stage of switching only if one or more ports on the same originating group originate connections to the same terminating group during the same cycle of time slots. These are the condition necessary to cause a priority encoder to receive simultaneous pulses. If several ports on the same originating group originate connections during the same cycle to different terminating groups, no contention would exist since the request pulses (terminating group address pulses) would occur during different time slots of the cycle. This is possible since originating group connections are set up in a fraction of time slot allowing the logic to establish connections at a rate of one each time slot.

Referring to Fig. 5, requests for connection are received by the intermediate groups in the form of partial terminating group address pulses passed through newly established originating group connections from originating ports on different originating groups. (Different originating groups since each group has only one line to any given intermediate group). The pulses are received by the priority encoder 540, which operates in the same manner as the previously described originating group encoder. Thus, if more than one pulse is received, only a connection for the lowest order request is established. The request(s) on other links are ignored so that the associated ports will receive no connection verification pulse, again indicating contention was encountered. Therefore, for contention to exist in an intermediate group, two or more ports on different originating groups must originate connections to the same terminating group during the same cycle. Additionally, in order for the same intermediate group to be selected by the involved originating groups, it must be the lowest order intermediate group having available links to both the addressed terminating group and to all involved originating groups.

Status logic contention

Referring to Fig. 7, requests for relocate information are received by the priority encoder 750. This circuit 750 generates an address equal to the line number of the active input. This address is used to direct responses back to the requesting circuit. If more than one input is active to the circuit 750, it will generate an address equal to the lowest order active line number. Thus, responses will be directed to only the lowest order requestor when multiple requests are received. The other requestors will receive no response, which is interpreted as a busy condition as previously described.

When a request for relocate information results in a relocate address transmission, no requests for relocate information will be responsed to for the duration of the transmission. Again, the lack of response is interpreted as a busy to the ignored requestors.

In every case of status logic contention, a higher priority requestor is about to make a connection attempt to or be relocated to the addressed line. Therefore, a retry connection is not necessary since the line in question is either busy or will be busy. Thus, it is sufficient to respond to such contention situations with a busy condition.

**Claim**

A distributed control progressive electronic circuit switching arrangement comprising
an originating group circuit arrangement having a multiple or originating terminals to which given information handling systems are to be connected,
an intermediate group circuit arrangement having a multiple of input terminals to be connected to corresponding terminals of said originating group circuit arrangement,
a terminating group circuit arrangement having a multiple of terminals to which other information handling systems are to be connected and having input terminals to be connected to corresponding terminals of said intermediate group circuit arrangement,
a source of timing pulses connected in common to each of said groups,
circuitry in said originating group circuit arrangement for accepting a request from an originating terminal to which a given information handling system is attached for connection to a particular terminating group circuit terminal to which is attached the specific information handling system with which communication is desired and for sensing the status from said intermediate groups with respect to the connectivity to that specific terminating group,
electronic switch circuitry connected between said originating terminal of said originating circuitry and a terminal thereof corresponding to the specific input terminal of said intermediate group and having an actuating terminal,
circuitry connected to said request accepting circuits and to said sensing circuitry and having an output terminal connected to said actuating terminal of said switching circuitry for establishing an electric connection in response to matching data at said comparing circuitry,
circuitry in said intermediate group for accepting a request relayed from said originating group due to the electric connection established thereby,
electronic switch circuitry connected between the input and output terminals of said intermediate group and each having an actuating terminal,
circuitry for sensing data·connected to said circuitry for accepting a request from said originating group and connected to the terminals connected to said terminating group and having an output terminal connected to said actuating terminal of said switch circuitry for establishing an electric connection in response to matching data,
circuitry in said terminating group for receiving said connection request as relayed from said intermediate group and for searching for the line address corresponding to said connection request,
circuitry in said terminating group for determining the available/busy status of the information handling system terminals and for returning an appropriate response to said originating group, and
switch circuitry in said terminating group for establishing electric connection in case of available status, and for disconnecting the connections established to this point in case of busy status.

**Patentanspruch**

Elektronische Leitungsvermittlungsanordnung mit verteilter Steuerung und mit

einer Ursprungsgruppenanschlußanordnung, die eine Vielzahl von Ursprungsanschlußstellen aufweist, an die gegebene Informationsbearbeitungssysteme anschließbar sind,

einer Zwischengruppenanschlußanordnung, die eine Vielzahl von Eingangsanschlußstellen aufweist, an die zugeordnete Anschlußstellen der Ursprungsgruppenanschlußanordnung anschließbar sind,

einer Zielgruppenanschlußanordnung, die eine Vielzahl von Anschlußstellen, an die andere Informationsbearbeitungssysteme anschließbar sind, sowie Engangsanschlußstellen aufweist, die an entsprechende Anschlußstellen der Zwischengruppenanschlußanordnung anschließbar sind,

einer Quelle für Zeittaktimpulse, die gemeinsam an jede der Gruppen angeschlossen ist,

Schaltkreisen in der Ursprungsgruppenanschlußanordnung zur Annahme einer Anforderung von der Ursprungsanschlußstelle, an die ein gegebenes Informationsbearbeitungssystem zur Verbindung mit einer einzelnen Zielgruppenanschlußanordnung-Anschlußstelle angeschlossen ist, an die das spezifische Informationsbearbeitungssystem angeschlossen ist, mit dem die Kommunikation erwünscht ist, und zur Überwachung des Zustandes von der Zwischengruppe bezüglich der Verbindungen zu der spezifischen Zielgruppe,

elektronischen Vermittlungsschaltkreisen, die zwischen der Ursprungsanschlußstelle der Ursprungsschaltkreise und einer Anschlußstelle derselben angeschlossen sind, die der spezifischen Eingangsanschlußstelle der Zwischengruppe entspricht und die eine Betätigungsanschlußstelle aufweist,

Schaltkreisen, die an die Anforderungsannahmeschaltkreise sowie die Überwachungsschaltkreise angeschlossen sind und eine Ausgangsanschlußstelle aufweisen, die mit der Betätigungsanschlußstelle der Vermittlungsschaltkreise verbunden ist, um eine elektrische Verbindung in Antwort auf zusammenpassende Daten an dem Vergleichschaltkreis zu erstellen,

Schaltkreisen in der Zwischengruppe zur Annahme einer Anforderung, die von der Ursprungsgruppe infolge der dadurch hergestellten Verbindung übermittelt wurde,

elektronischen Vermittlungsschaltkreisen, die zwischen den Eingangs- und Ausgangsanschlußstellen der Zwischengruppen angeschlossen sind und jeweils eine Betätigungsanschlußstelle aufweisen,

Schaltkreisen zum Abfragen von Daten, die mit den Schaltkreisen zur Annahme einer Anforderung von der Ursprungsgruppe und Anschlußstellen verbunden sind, die mit der Zielgruppe verbunden sind, und die eine Ausgangsanschlußstelle aufweisen, die mit der Betätigungsanschlußstelle der Vermittlungsschaltkreise verbunden ist, um eine elektrische Verbindung in Antwort auf übereinstimmende Daten herzustellen,

Schaltkreisen in der Zielgruppen zum Empfang der von der Zwischengruppe übermittelten Verbindungsanforderung und zum Suchen der Leitungsadresse, die dem Verbindungswunsch entspricht,

Schaltkreisen in der Zielgruppe zum Bestimmen des Erreichbarkeits-/Besetztzustandes der Informationsbearbeitungssystemsanschlußstellen und zum Rücksenden einer geeigneten Antwort an die Ursprunggruppe, und

Vermittlungsschaltkreisen in der Zielgruppe zum Erstellen einer elektrischen Verbindung im Fall des Zustandes der Erreichbarkeit und zum Unterbrechen der bis zu diesem Punkt hergestellten Verbindungen im Fall des Besetztzustandes.

**Revendication**

Circuit de commutation électronique progressif à commande répartie, comprenant: un dispositif de circuits de groupe d'origine qui comporte une pluralité de bornes d'origine auxquelles des systèmes donnés de traitement d'information peuvent être connectés; un dispositif de circuits de groupe intermédiaire qui comporte une pluralité de bornes d'entrée à connecter à des bornes correspondantes dudit dispositif de circuits de groupe d'origine; un dispositif de circuits de groupe terminal qui comporte une pluralité de bornes auxquelles d'autres systèmes de traitement d'information peuvent être connectés et qui comporte des bornes d'entrée à connecter à des bornes correspondantes dudit dispositif de circuits de groupe intermédiaire; une source d'impulsions de séquencement de temps raccordée en commun à chacun des dits groupes; des circuits prévus dans ledit dispositif de circuits de groupe d'origine pour accepter une demande venant d'une borne d'origine à laquelle est relié un système donné de traitement d'information, en vue d'une connexion à une borne particulière de circuit de groupe de destination à laquelle est relié le système spécifique de traitement d'information avec lequel une communication est désirée, et pour détecter l'état desdits groupes intermédiaires en ce qui concerne la possibilité de connexion à ce groupe terminal spécifique; des circuits de commutation électroniques raccordés entre ladite borne d'origine desdits circuits d'origine et une borne de ces derniers qui correspond à la borne d'entrée spécifique dudit groupe intermédiaire, et comportant une borne d'activation; des circuits raccordés auxdits circuits d'acceptation de demande et auxdits circuits de détection et comportant une borne de sortie reliée à ladite borne d'activation dudit circuit de commutation pour établir une connexion électrique en réponse à une concordance des données dans ledit circuit de comparaison; des circuits prévus dans ledit groupe intermédiaire pour accepter une demande relayée à partir dudit groupe d'origine du fait de la connexion électrique ainsi établie; des circuits électroniques de commutation raccordés entre les bornes d'entrée et de sortie dudit groupe intermédiaire et comportant chacun une borne d'activation; des circuits de détection de donnéss raccordés auxdits circuits pour accepter une demande venant dudit groupe d'origine et raccordés aux bornes reliées audit groupe terminal et comportant une borne de sortie reliée à ladite borne d'activation desdits circuits de commutation pour établir une connexion électrique en réponse à la concordance de données; des circuits prévus dans ledit groupe terminal pour recevoir ladite demande de connexion relayée à partir dudit groupe intermédiaire et pour rechercher l'adresse de ligne correspondant à ladite demande de connexion; des circuits prévus dans ledit groupe terminal pour déterminer l'état de disponibilité/occupation des bornes du système de traitement d'information et pour envoyer une réponse appropriée audit groupe d'origine; et des circuits de commutation dans ledit groupe terminal pour établir une connexion électrique dans le cas d'un état de disponibilité et pour déconnecter les connexions établies vers ce point dans le cas d'un état d'occupation.

FIG. 1

FIG. 2

INFORMATION FORMAT

FIG. 3

**0 100 842**

ORIGINATING CONTROL AND SWITCH MATRIX

FIG. 4

INTERMEDIATE CONTROL AND SWITCH MATRIX

FIG. 5

FIG. 6A

REV OUT DATA

C TIME

BUSY

614

A

622
A

618

G

TO
SWITCHING
620

J Q
C̄
K R̄ Q̄

616
A

S TIME

659
A

660
A

682
A

658
O

656
A

RESPONSE X

**FIG. 6B**

664
A

662
O

LINE BUSY

LINE BUSY

RR

R̄R̄

| FIG. 6A | FIG. 6B |
|---------|---------|

KEY TO FIG. 6

FIG. 7

TERMINATING GROUP CONTROL LOGIC

FIG. 8

# 0 100 842

TERMINATING SWITCH MATRIX

FIG. 9

PRIMARY FORWARD SWITCH PLANE
PRIMARY REVERSE SWITCH PLANE

4 INPUTS

1000
1001
1002
1003

D0
D1 MUX 0
D2
D3
ADDR
ENABLE

1020

1010

D0
D1 MUX 1
D2
D3
ADDR
ENABLE

1021

1011

2
2
2
2
2
2
2
2

8 TWO-BIT ADDRESSES

(COMMON TO ALL FOUR SWITCH PLANES)

8 ENABLES

8 OUTPUTS

D0
D1 MUX 7
D2
D3
ADDR
ENABLE

1027

1017

11

PRIMARY REVERSE SWITCH PLANE
TERTIARY FORWARD SWITCH PLANE

FIG. 11

TRANSPARENT FULL DUPLEX PATH EXISTS
BETWEEN PORT 'A' AND TERMINATING GRP.'2'

FIG. 12

# 0 100 842

SECONDARY FORWARD SWITCH PLANE

FIG. 13

**SECONDARY REVERSE SWITCH PLANE**

FIG. 14

| CYCLE NO. | 2 | 3 |
|---|---|---|
| 1500 { OPERATION | LINE ADDRESS TRANSMISSION | ADDRESS TYPE TRANSMISSION |
| BIT TIMES | 0 1 2 3 | 0 1 2 3 |

S C S C S C S C S C S C S C S C

LINE ADDR.=2

1510 — PART 'A' TERMINATING GROUP

ASSIGNED ADDR.

1520 — TERMINATING GROUP PORT 'A'

FIG. 15

FIG. 16

CYCLE NO.                           6

1700 { OPERATION:        INITIATE DATA PHASE SEQUENCE.

BIT TIMES:        2    3    0    1    2    3    0    1
WAIT FOR        S C S C S C S C S C S C S C S C
OFF HOOK

PORT 'A'  →  1710
PORT 'B'

POSITIVE RESPONSE ——

PORT 'B'  →  1720
PORT 'A'

FIG. 17

OPERATION: DISCONNECT SEQUENCE

BIT TIMING    2    3    0    1    2    3    0    1

|S|C|S|C|S|C|S|C|S|C|S|C|S|C|S|C|

1800

PORT 'A' DISCONTINUES BUSY SEQUENCE

1810

PORT 'A'  →
PORT 'B'

PORT 'B' FOLLOWS

1820

PORT 'B'  →
PORT 'A'

CONNECTION IS BROKEN

TERMINAL CONNECTED TO 'A'
INITIATES DISCONNECT SEQUENCE.

FIG. 18

0 100 842